(19) Europäisches Patentamt
European Patent Office
Office européen des brevets

(11) **EP 3 080 560 B1**

(12) **EUROPÄISCHE PATENTSCHRIFT**

(45) Veröffentlichungstag und Bekanntmachung des Hinweises auf die Patenterteilung:
**14.07.2021 Patentblatt 2021/28**

(21) Anmeldenummer: **14793095.2**

(22) Anmeldetag: **03.11.2014**

(51) Int Cl.:
*G01F 1/84* *(2006.01)*          *G01N 9/00* *(2006.01)*
*G01N 11/16* *(2006.01)*

(86) Internationale Anmeldenummer:
**PCT/EP2014/073520**

(87) Internationale Veröffentlichungsnummer:
**WO 2015/086224 (18.06.2015 Gazette 2015/24)**

(54) **DICHTE-MESSGERÄT**

DEVICE FOR MEASURING DENSITY

DISPOSITIF POUR MESURER LA DENSITÉ

(84) Benannte Vertragsstaaten:
**AL AT BE BG CH CY CZ DK EE ES FI FR GB GR HR HU IE IS IT LI LT LU LV MC MK MT NL NO PL PT RO RS SE SI SK SM TR**

(30) Priorität: **09.12.2013 DE 102013113689**

(43) Veröffentlichungstag der Anmeldung:
**19.10.2016 Patentblatt 2016/42**

(73) Patentinhaber: **Endress+Hauser Flowtec AG**
**4153 Reinach (BL) (CH)**

(72) Erfinder:
• **HUBER, Christof**
**CH-3007 Bern (CH)**
• **KUMAR, Vivek**
**CH-4123 Allschwil (CH)**
• **SCHWER, Tobias**
**79199 Kirchzarten (DE)**
• **MONTSKO, Philipp**
**79736 Rickenbach (DE)**

(74) Vertreter: **Andres, Angelika Maria**
**Endress+Hauser Group Services**
**(Deutschland) AG+Co. KG**
**Colmarer Straße 6**
**79576 Weil am Rhein (DE)**

(56) Entgegenhaltungen:
WO-A1-2006/104690          WO-A2-2009/056270
DE-A1-102008 046 891      DE-U1- 8 712 331
US-A- 5 533 381

**Beschreibung**

Die Erfindung betrifft ein vibronisches Dichte-Messgerät zum Messen einer Dichte, p, eines strömungsfähigen Mediums, insb. eines in einer Rohrleitung strömenden Fluids.

In der industriellen Messtechnik werden, insb. auch im Zusammenhang mit der Regelung und Überwachung von automatisierten verfahrenstechnischen Prozessen, zur hochgenauen Ermittlung von Dichten von in einer Prozessleitung, beispielsweise einer Rohrleitung, strömenden Medien, beispielsweise von Flüssigkeiten und/oder Gasen, oftmals jeweils mittels einer - zumeist mittels wenigstens einen Mikroprozessors gebildeten - Messgerät-Elektronik sowie einem mit nämlicher Messgerät-Elektronik elektrisch verbundenen, im Betrieb vom zu messenden Medium durchströmten Messwandler vom Vibrationstyp gebildete vibronische Dichte-Messgeräte verwendet. Solche - beispielsweise als sogenannte Vierleiter- oder auch als sogenannte Zweileitergeräte ausgebildete - Dichte-Messgeräte sind seit langem bekannt, nicht zuletzt auch ingestalt von Coriolis-Massendurchfluss-/Dichte-Messgeräten oder auch ingestalt von Viskositäts-Dichte-Messgeräten, und im industriellen Einsatz etabliert. Beispiele für solche vibronischen Dichte-Messgeräte bzw. dafür geeignete Messwandler sind u.a. in der US-A 2004/0123645, der US-A 2006/0096390, der US-A 2007/0119264, der US-A 2008/0047362, der US-A 2008/0190195, der US-A 2010/0005887, der US-A 2010/0011882, der US-A 2010/0257943, der US-A 2011/0161017, der US-A 2011/0219872, der US-A 2011/0265580, der US-A 2012/0123705, der US-A 44 91 009, der US-A 45 24 610, der US-A 48 01 897, der US-A 49 96 871, der US-A 50 24 104, der US-A 52 87 754, der US-A 52 91 792, der US-A 53 49 872, der US-A 55 31 126, der US-A 57 05 754, der US-A 57 96 010, der US-A 57 96 011, der US-A 58 31 178, der US-A 59 45 609, der US-A 59 65 824, der US-A 60 06 609, der US-A 60 92 429, der US-B 62 23 605, der US-B 63 11 136, der US-B 64 77 901, der US-B 65 13 393, der US-B 66 47 778, der US-B 66 66 098, der US-B 66 51 513, der US-B 67 11 958, der US-B 68 40 109, der US-B 69 20 798, der US-B 70 17 424, der US-B 70 59 176, der US-B 70 77 014, der US-B 72 00 503, der US-B 72 16 549, der US-B 73 25 462, der US-B 73 60 451, der US-B 77 92 646, der WO-A 00/34748, der WO-A 01/02 816, der WO-A 2008/059262, der WO-A 2013/092104, der WO-A 85/05677, der WO-A 88/02853, der WO-A 89/00679, der WO-A 94/21999, der WO-A 95/03528, der WO-A 95/16897, der WO-A 95/29385, der WO-A 98/02725, der WO-A 99/40 394, der WO-A 00/34748 oder auch in den nicht vorveröffentlichten Deutschen Patentanmeldungen DE102013101369.4, DE102013102708.3 bzw. DE102013102711.3 beschrieben. Der Messwandler eines jeden der darin gezeigten Dichte-Messgeräte umfasst wenigstens ein zumindest abschnittsweise gerades und/oder zumindest abschnittsweise gekrümmtes, z.B. U-, V-, S-, Z- oder $\Omega$-artig geformtes, Messrohr mit einem von einer Rohrwand umgebenen Lumen zum Führen des Mediums, wobei nämliche Rohrwand - je nach Verwendung - typsicherweise aus einem Metall, etwa Titan bzw. einer Titanlegierung, Tantal bzw. einer Tantallegierung, Zirkonium bzw. einer Zirkoniumlegierung, einem Edelstahl oder einer Nickelbasislegierung, oder beispielsweise auch aus Silizium bestehen und ein Kaliber nämlichen Messrohrs - je nach Verwendung - typischerweise in einem Bereich zwischen 0,5 mm und 100 mm liegen können.

Das wenigstens eine Messrohr eines solchen Messwandlers ist dafür eingerichtet, im Lumen Medium zu führen und währenddessen so vibrieren gelassen zu werden, dass es Nutzschwingungen, nämlich mechanische Schwingungen um eine Ruhelage mit einer auch von der Dichte des Mediums mitbestimmten, mithin als Maß für die Dichte verwendbaren Nutzfrequenz ausführt. Bei herkömmlichen Dichte-Messgeräten dienen typsicherweise Biegeschwingungen auf einer natürlichen Resonanzfrequenz als Nutzschwingungen, beispielsweise solche Biegeschwingungen, die einem dem Messwandler immanenten natürlichen Biegeschwingungsgrundmode entsprechen, in dem die Schwingungen des Messrohrs solche Resonanzschwingungen sind, die genau einen Schwingungsbauch aufweisen. Die Nutzschwingungen sind bei einem zumindest abschnittsweise gekrümmtem Messrohr zudem typischerweise so ausgebildet, dass das nämliches Messrohr um eine ein einlassseitiges und ein auslassseitiges Ende des Messrohrs imaginär verbindenden gedachte Schwingungsachse nach Art eines an einem Ende eingespannten Auslegers pendelt, während hingegen bei Messwandlern mit einem geraden Messrohr die Nutzschwingungen zumeist Biegeschwingungen in einer einzigen gedachten Schwingungsebene sind. Es ist zudem bekannt, das wenigstens eine Messrohr zwecks Durchführung wiederkehrender Überprüfungen des Messwandlers während des Betriebs des Dichte-Messgeräts gelegentlich auch zu zeitlich andauernden Schwingungen außer Resonanz anzuregen sowie nämliche Schwingungen außer Resonanz auszuwerten, beispielsweise um, wie in der vorgenannten US-A 2012/0123705 beschrieben, allfällige Beschädigungen des wenigstens einen Messrohrs möglichst frühzeitig zu detektieren, die eine unerwünschte Verringerung der Messgenauigkeit und/oder der Betriebssicherheit des jeweiligen Dichte-Messgeräts bewirken können.

Bei Messwandlern mit zwei Messrohren sind diese zumeist über ein sich zwischen den Messrohren und einem einlassseitigen Anschlussflansch erstreckenden einlassseitig Verteilerstück sowie über ein sich zwischen den Messrohren und einem auslassseitigen Anschlussflansch erstreckenden auslassseitig Verteilerstück in die jeweilige Prozessleitung eingebunden. Bei Messwandlern mit einem einzigen Messrohr kommuniziert letzteres zumeist über ein einlassseitig einmündendes Verbindungsrohr sowie über ein auslassseitig einmündendes Verbindungsrohr mit der Prozessleitung. Ferner umfassen Messwandler mit einem einzigen Messrohr jeweils wenigstens einen einstückigen oder mehrteilig ausgeführten, beispielsweise rohr-, kasten- oder plattenförmigen, Gegenschwinger, der unter Bildung einer ersten Kopplungszone einlassseitig an das Messrohr gekoppelt ist und der unter Bildung einer zweiten Kopplungszone auslassseitig an das Messrohr gekoppelt ist, und der im Betrieb im Wesentlichen ruht oder entgegengesetzt zum Messrohr oszilliert. Das mittels Messrohr und Gegenschwinger gebildete Innenteil des Messwandlers ist zumeist allein mittels der zwei Verbindungsrohre, über die das Messrohr im Betrieb mit der Prozessleitung kommuniziert, in einem schutzgebenden Messwandler-Gehäuse gehalten, insb. in einer Schwingungen des Innenteil relativ zum Messwandler-Gehäuse ermöglichenden Weise. Bei den beispielsweise in der US-A 52 91 792, der US-A 57 96 010, der US-A 59 45 609, der US-B 70 77 014, der US-A 2007/0119264, der WO-A 01/02 816 oder auch der WO-A 99/40 394 gezeigten Messwandlern mit einem einzigen, im Wesentlichen geraden Messrohr sind letzteres und der Gegenschwinger, wie bei herkömmlichen Messwandlern durchaus üblich, zueinander im Wesentlichen koaxial ausgerichtet, indem der Gegenschwinger als im Wesentlichen gerader Hohlzylinder ausgebildet und im Messwandler so angeordnet ist, dass das Messrohr zumindest teilweise vom Gegenschwinger ummantelt ist. Als Materialien für solche Gegenschwinger kommen, insb. auch bei Verwendung von Titan, Tantal oder Zirkonium bzw. Legierungen davon für das Messrohr, zumeist vergleichsweise kostengünstige Stahlsorten, wie etwa Baustahl oder Automatenstahl, zum Einsatz.

Zum aktiven Anregen bzw. Aufrechterhalten von Schwingungen des wenigstens einen Messrohrs, nicht zuletzt auch den Nutzschwingungen, weisen Messwandler vom Vibrationstyp des weiteren eine mittels wenigstens eines im Betrieb differentiell auf das wenigstens eine Messrohr und den ggf. vorhandenen Gegenschwinger bzw. das ggf. vorhandene andere Messrohr einwirkenden elektromechanischen, beispielsweise nämlich elektrodynamischen, elektrostatischen oder piezoelektrischen, Schwingungserregers gebildete Erregeranordnung auf. Der mittels eines Paars elektrischer Anschlussleitungen, beispielsweise inform von Anschlussdrähten und/oder inform von Leiterbahnen einer flexiblen Leiterplatte, mit der erwähnten Messgerät-Elektronik elektrisch verbundene Schwingungserreger dient im Besonderen dazu, angesteuert von einem von der Messgerät-Elektronik generierten und entsprechend konditionierten, nämlich zumindest an sich verändernde Schwingungseigenschaften des wenigstens einen Messrohrs angepassten elektrischen Erregersignal, eine mittels nämlichen Erregersignals eingespeiste elektrische Erregerleistung in eine an einem vom Schwingungserreger gebildeten Angriffspunkt auf das wenigstens eine Messrohr wirkende Antriebskraft zu wandeln.

Das Erregersignal ist hierbei im Besonderen so konditioniert, dass die Antriebskraft im Ergebnis eine in das Messrohr eingeleitete Nutzkraftkomponente, nämlich eine sich mit einer der Nutzfrequenz entsprechenden Anregungsfrequenz ändernde, die Nutzschwingungen bewirkende periodische Kraftkomponente, aufweist. Dies ist typischerweise dadurch realisiert, dass nämliches Erregersignal eine Nutzanregungskomponente, nämlich eine sich mit einer der Nutzfrequenz entsprechenden Signalfrequenz ändernde harmonische Signalkomponente enthält, die im Vergleich zu allfälligen weiteren im Erregersignal enthaltenen Signalkomponenten anderer Frequenz eine höchste Signalleistung aufweist.

Für den erwähnten Fall, dass dem Biegeschwingungsgrundmode entsprechende Resonanzschwingungen als Nutzschwingungen dienen bzw. die Anregungsfrequenz exakt auf die entsprechende Resonanzfrequenz eingestellt ist, weist eine Geschwindigkeitsantwort des wenigstens einen Messrohrs, nämlich eine sich mit der Nutzfrequenz zeitlich ändernde Geschwindigkeit der Schwingungsbewegungen des wenigstens einen Messrohrs am Angriffspunkt, gegenüber der Nutzkraftkomponente der Antriebskraft bekanntlich keine Phasenverschiebung auf, mithin liegen die Nutzkraftkomponente der Antriebskraft und die Geschwindigkeitsantwort unter Resonanzbedingung ($\Re$) in Phase bzw. beträgt unter Resonanzbedingung ein entsprechender Phasenverschiebungswinkel zwischen nämlicher Nutzkraftkomponente und nämlicher Geschwindigkeitsantwort Null. Das Erregersignal ist hierbei zudem oftmals auch so konditioniert, dass die Nutzschwingungen trotz schwankender Dichte und/oder Viskosität eine im Wesentlichen gleichbleibende Schwingungsamplitude aufweisen. Dies wird bei Dichte-Messgeräten der in Rede stehenden Art typischerweise erreicht, indem das jeweilige Erregersignal bzw. die Nutzanregungskomponente einen eingeprägten, nämlich von der Messgerät-Elektronik weitgehend unabhängig von allfälligen Störungen auf einen vorgegebenen Effektivwert geregelten Strom aufweist, und/oder indem das jeweilige Erregersignal bzw. die Nutzanregungskomponente eine eingeprägte, nämlich von der Messgerät-Elektronik weitgehend unabhängig von allfälligen Störungen auf einen vorgegebenen Effektivwert geregelte Spannung aufweist.

Schwingungserreger marktgängiger Messwandler vom Vibrationstyp sind typischerweise nach Art einer Schwingspule aufgebaut, nämlich mittels einer - bei Messwandlern mit einem Messrohr und einem daran gekoppelten Gegenschwinger zumeist an letzterem fixierten - Magnetspule sowie einen mit der wenigstens einen Magnetspule wechselwirkenden als Magnetanker dienenden Dauermagneten gebildet, der entsprechend am zu bewegenden Messrohr fixiert ist. Der Dauermagnet und die Magnetspule sind dabei üblicherweise so ausgerichtet, dass sie zueinander im Wesentlichen koaxial verlaufen. Zudem ist bei herkömmlichen Messwandlern der Schwingungserreger zumeist so ausgebildet und platziert, dass er im Wesentlichen mittig an das wenigstens eine Messrohr angreift. Alternativ zu einer mittels eher zentral und direkt auf das Messrohr wirkenden Schwingungserregern gebildeten Erregeranordnung können, wie u.a. in der eingangs erwähnten US-A 60 92 429, beispielsweise auch mittels zweier nicht im Zentrum des Messrohres, sondern eher ein- bzw. auslassseitig an diesem fixierten Schwingungserreger gebildete Erregeranordnungen verwendet werden oder, wie u.a. in der US-B 62 23 605 oder der US-A 55 31 126 vorgeschlagen, beispielsweise auch mittels eines zwischen dem ggf. vorhandenen Gegenschwinger und dem Messwandler-Gehäuse wirkenden Schwingungserreger gebildete Erregeranordnungen verwendet werden. Wie u.a. in der US-B 64 77 901 oder WO-A 00/34748 gezeigt, können alternativ zu den vorgenannten Schwingungserregern vom elektrodynamischen Typ allerdings gelegentlich auch piezoelektrische, seismische oder - nicht zuletzt auch bei einem solchen Messwandler, dessen wenigstens eines Messrohr ein sehr kleines Kaliber von weniger als 1 mm aufweist - elektrostatische Schwingungserreger zum Anregen von Nutzschwingungen verwendet werden.

Zum Erfassen von Schwingungsbewegungen des wenigstens einen Messrohrs, nicht zuletzt auch den den Nutzschwingungen entsprechenden, weisen Messwandler der in Rede stehenden Art ferner wenigstens einen am Messrohr platzierten, beispielsweise mittels eines eigenen Paars elektrischer Anschlussleitungen mit der Messgerät-Elektronik elektrisch verbundenen, Schwingungssensor auf, der dafür eingerichtet ist, nämliche Schwingungsbewegungen in ein diese repräsentierendes Schwingungs-Messsignal zu wandeln, das eine Nutzsignalkomponente, nämlich eine periodische Signalkomponente mit einer der Nutzfrequenz entsprechenden Signalfrequenz, enthält, und nämliches Schwingungs-Messsignal der Messgerät-Elektronik, beispielsweise nämlich einer mittels wenigstens eines Mikroprozessors gebildeten Mess- und Betriebsschaltung der Messgerät-Elektronik, zur weiteren Verarbeitung zur Verfügung zu stellen. Bei Messwandlern von marktgängigen vibronischen Dichte-Messgeräten sind die Schwingungssensoren zumeist insoweit im Wesentlichen baugleich ausgebildet wie der wenigstens eine Schwingungserreger, als sie nach dem gleichen Wirkprinzip arbeiten, im Falle eines elektrodynamischen Schwingungserregers beispielsweise also jeweils ebenfalls vom elektrodynamischen Typ sind. Dementsprechend sind auch die Schwingungssensoren einer solchen Sensoranordnung zumeist ebenfalls jeweils mittels eines am Messrohr fixierten Dauermagneten und wenigstens einer - beispielsweise am ggf. vorhanden anderen Messrohr oder am ggf. vorhandenen Gegenschwinger fixierten - von einem Magnetfeld des Dauermagneten durchsetzten Spule gebildet, die infolge der Schwingungsbewegungen des wenigstens einen Messrohrs zumindest zeitweise mit einer induzierten Messspannung beaufschlagt ist. Gleichwohl sind aber auch optisch oder auch kapazitiv messende Schwingungssensoren zur Schwingungsmessung üblich, beispielsweise auch für den Fall, dass der Schwingungserreger vom elektrodynamischen Typ ist.

Das bei konventionellen vibronischen Dichte-Messgeräten für die Messung der Dichte essentielle Erfüllen der Resonanzbedingung ($\Re$ ) kann im Betrieb beispielsweise dadurch erkannt werden, indem von der jeweiligen Messgerät-Elektronik ermittelt wird, dass ein Phasenverschiebungswinkel zwischen Nutzanregungskomponente und Nutzsignalkomponente einen vorgegebenen, nämlich der oben bezeichneten Resonanzbedingung, bei der der Phasenverschiebungswinkel zwischen der Geschwindigkeitsantwort und der Nutzkraftkomponente der Antriebskraft Null ist, entsprechenden Phasenwert erreicht hat und mindestens für ein vorgegebenes, nämlich für eine Messung der Dichte ausreichend langes Zeitintervall im Wesentlichen konstant geblieben ist. Um eine hochgenaue Messung der Dichte auch für Medien mit einer innerhalb eines weiten Dichte-Messbereichs veränderlichen und/der zeitlich rasch ändernden Dichte zu realisieren, mithin eine Dichte-Messgerät mit einem möglichst hohen Dynamikbereich bereitzustellen, sind die Messgerät-Elektroniken von Messgeräten der in Rede stehenden Art nicht zuletzt auch dafür eingerichtet, das Erregersignal so zu konditionieren, dass die Anregungsfrequenz der Nutzkraftkomponente während der Messung der Dichte möglichst exakt einer jeweiligen momentanen Resonanzfrequenz, beispielsweise also der des erwähnten Biegeschwingungsgrundmodes, entspricht bzw. dass die Anregungsfrequenz einer allfällig veränderten Resonanzfrequenz, etwa infolge einer schwankenden Dichte und/oder einer schwankenden Temperatur des Messrohrs, möglichst rasch nachgeführt wird. Das Justieren der Nutzkraftkomponente mittels der Messgerät-Elektronik erfolgt bei konventionellen Dichte-Messgeräten typischerweise unter Ausnutzung der oben bezeichneten Resonanzbedingung, derart, dass mittels des wenigstens einen Schwingungs-Messsignals - beispielsweis nämlich basierend auf dessen Nutzsignalkomponente - sowie mittels des Erregersignals - beispielsweise nämlich durch Einstellen der Signalfrequenz der Nutzanregungskomponente - die Anregungsfrequenz der Nutzkraftkomponente kontinuierlich bzw. sukzessive verändert wird, und zwar soweit bzw. solange, bis der Phasenverschiebungswinkel zwischen Nutzanregungskomponente und Nutzsignalkomponente den vorgegebenen Phasenwert erreicht hat, beispielsweise also näherungsweise Null ist. Zum Einstellen bzw. Nachführen der Nutzfrequenz des jeweiligen Messrohrs auf eine von dessen momentaner Resonanzfrequenz geeignete - beispielsweise als Phasenregelschleife (PLL) konfigurierte - elektronische Schaltungen bzw. damit realisierte Frequenzregelverfahren sind dem Fachmann an und für sich bekannt, beispielweise aus den eingangs erwähnten US-A 48 01 897 bzw. US-A 2010/0005887.

Aufgrund der Nutzschwingungen des wenigstens einen Messrohrs, können - nicht zuletzt auch für den Fall, dass die Nutzschwingungen des wenigstens einen Messrohrs Biegeschwingungen sind - im strömenden Medium bekanntlich auch von der momentanen Massendurchflussrate abhängige Corioliskräfte induziert werden. Diese wiederum können von der Massendurchflussrate abhängige, sich den Nutzschwingungen überlagernde Coriolisschwingungen mit Nutzfrequenz bewirken, derart, dass zwischen einlassseitigen und auslassseitigen Schwingungsbewegungen des Nutzschwingungen ausführenden und zugleich vom Medium durchströmten wenigstens einen Messrohrs eine auch von der Massedurchflussrate abhängige, mithin auch als Maß für die Massendurchflussmessung nutzbare Laufzeit- bzw. Phasendifferenz detektiert werden kann. Bei einem zumindest abschnittsweise gekrümmtem Messrohr, bei dem für die Nutzschwingungen eine Schwingungsform, in der nämliches Messrohr nach Art eines an einem Ende eingespannten Auslegers pendeln gelassen wird, gewählt ist, entsprechen die resultierenden Coriolisschwingungen beispielsweise jenem - gelegentlich auch als Twist-Mode bezeichneten - Biegeschwingungsmode, in dem das Messrohr Drehschwingungen um eine senkrecht zur erwähnten gedachten Schwingungsachse ausgerichtete gedachte Drehschwingungsachse ausführt, wohingegen bei einem geraden Messrohr, dessen Nutzschwingungen als Biegeschwingungen in einer einzigen gedachten Schwingungsebene ausgebildet sind, die Coriolisschwingungen beispielsweise als zu den Nutzschwingungen im Wesentlichen koplanare Biegeschwingungen sind. Für den eingangs bereits erwähnten Fall, dass mittels des Dichte-Messgeräts zusätzlich zur Dichte zudem auch die Massendurchflussrate des jeweils im Messwandler geführten Mediums ermittelt werden soll, weisen Messwandler der in Rede stehenden Art zwecks des Erfassens sowohl einlassseitiger als auch auslassseitiger Schwingungsbewegungen des wenigstens einen Messrohrs und zum Erzeugen wenigstens zweier von der zu messenden Massendurchflussrate beeinflussten elektrischen Schwingungs-Messsignalen des Weiteren zumeist zwei oder mehr entlang des Messrohrs voneinander beabstandete Schwingungssensoren auf, die so ausgestaltet und angeordnet sind, dass die damit generierten und an die Messgerät-Elektronik geleitete Schwingungs-Messsignale nicht nur, wie bereits erwähnt, jeweils eine Nutzsignalkomponente aufweisen, sondern dass zudem auch zwischen den Nutzsignalkomponenten beider Schwingungs-Messsignale eine von der Massendurchflussrate abhängige Laufzeit- bzw. Phasendifferenz Messbar ist. Alternativ oder in Ergänzung zur Messung auch der Massendurchflussrate zusätzlich zur Messung der Dichte ist es - wie bereits erwähnt bzw. u.a. in der eingangs erwähnten US-A 2011/0265580 gezeigt - zudem auch möglich, mittels solcher Messwandler vom Vibrationstyp, mithin mittels damit gebildeten vibronischen Dichte-Messgeräten zusätzlich auch eine Viskosität des hindurchströmenden Mediums direkt zu messen, beispielsweise basierend auf einer für die Anregung bzw. Aufrechterhaltung der Nutzschwingungen erforderlichen elektrischen Erregerleistung bzw. basierend auf einer anhand der Erregerleistung ermittelten Dämpfung der Nutzschwingungen, und in Form qualifizierter Viskositäts-Messwerte auszugeben.

Bei vibronischen Dichte-Messgeräten der in Rede stehenden Art erfolgt die Ermittlung der Dichte, wie bereits erwähnt, typischerweise basierend auf aktiv angeregten Resonanzschwingungen des wenigstens einen Messrohrs, insbesondere nämlich basierend auf einer Messung wenigstens einer von dessen momentanen Resonanzfrequenzen. Die jeweilige Messgerät-Elektronik herkömmlicher vibronischer Dichte-Messgeräten ist dementsprechend auch dafür eingerichtet, basierend auf der aus dem wenigstens einen unter Resonanzbedingung ($\Re$) generierten Schwingungs-Messsignal gewonnenen Nutzsignalkomponente wiederkehrend einen Frequenz-Messwert zu ermitteln, der die jeweils aktuelle Nutzfrequenz, mithin die aktuelle Resonanzfrequenz des wenigstens einen Messrohrs repräsentiert und hernach unter Verwendung eines oder mehrerer nämlicher Frequenz-Messwerte einen die Dichte des jeweiligen Mediums repräsentierenden, typischerweise zunächst digitalen Dichte-Messwert zu generieren, beispielsweise durch Ausführen entsprechender Berechnungsalgorithmen durch den erwähnten Mikroprozessor. Nachdem die Schwingungseigenschaften des wenigstens einen Messrohrs, nicht zuletzt auch dessen jeweiligen Resonanzfrequenzen, und damit einhergehend Dichte-Messgenauigkeit, nämlich einer Messgenauigkeit, mit der die Dichte gemessen werden kann, bekanntlich auch von einer Temperaturverteilung innerhalb der jeweiligen Rohrwand des wenigstens einen Messrohrs abhängig sind, wird, wie u.a. den eingangs erwähnten US-A 44 91 009, WO-A 88/02853, WO-A 98/02725 oder WO-A 94/21999 entnehmbar, bei derartigen Dichtemessungen typischerweise zumindest auch eine Messrohrtemperatur mit berücksichtigt. Zur Ermittlung derselben wird zumindest eine lokale Temperatur des wenigstens einen Messrohrs auf einer dessen Lumen abgewandten Oberfläche der Rohrwand sensorisch erfasst, typischerweise mittels eines darauf aufgeklebten und mit der jeweiligen Messgerät-Elektronik elektrisch verbundenen Platin-Widerstandes eines Widerstandsthermometers oder eines auf nämliche Oberfläche aufgeklebten und mit der jeweiligen Messgerät-Elektronik elektrisch verbundenen Thermoelements, und ist die Messgerät-Elektronik ferner dafür eingerichtet ist, basierend auf einem nämliche Temperatur des wenigstens einen Messrohrs repräsentierenden Temperatursignal im Betrieb einen eine Temperatur der Rohrwand repräsentierenden Temperatur-Messwert wiederkehrend zu ermitteln und nämlichen Temperatur-Messwert, nicht zuletzt zwecks Verringerung einer Querempfindlichkeit des Dichte-Messgeräts gegenüber Temperatureinflüssen, bei der Berechnung der Dichte jeweils mit zu verwenden. Die eigentliche Messung der Dichte erfolgt bei herkömmlichen Dichte-Messgeräten der vorgenannten Art schlussendlich dadurch, dass - nachdem durch die Messgerät-Elektronik ein Erfüllen der Resonanzbedingung festgestellt ist - mittels der Messgerät-Elektronik anhand der, beispielsweise mittels digitaler Signalfilter aus dem wenigstens einen Schwingungs-Messsignal extrahierten, Nutzsignalkomponente zunächst wenigstens ein die als Nutzfrequenz dienende Resonanzfrequenz repräsentierender Frequenz-Messwert ermittelt wird und nämlicher Frequenz-Messwert hernach in den entsprechenden, nämlich die Dichte momentan repräsentierenden Dichte-Messwert umgerechnet wird. Die Umrechnung des Frequenz- in den zugehörigen Dichte-Messwert kann beispielsweise unter Bildung eines Kehrwerts eines Quadrats des Frequenz-Messwerts und Verrechnung desselben zusammen mit einem entsprechenden Temperatur-Messwert für die momentane Temperatur der Rohrwand mit einer in der Messgerät-Elektronik entsprechend - beispielsweise inform eines vom erwähnten Mikroprozessors auszuführenden Berechnungsalgorithmus - hinterlegten Kennlinienfunktion erfolgen.

Eine weitere Verbesserung der Dichte-Messgenauigkeit kann bei vibronischen Dichte-Messgeräten der vorgenannten Art zudem auch dadurch erreicht werden, dass, wie u.a. auch in den eingangs erwähnten US-A 2004/0123645, US-A 2011/0219872, WO-A 94/21999,

WO-A 98/02725 gezeigt, zwecks Korrektur allfälliger weiterer Abhängigkeiten der Resonanzfrequenz von anderen mediums- bzw. strömungsspezifischen Messgrößen, wie etwa einer Massendurchflussrate des im wenigstens einen Messrohr strömenden Medium bzw. einem innerhalb des im wenigstens einen Messrohrs geführten Medium herrschenden Druck, und/oder zwecks Korrektur allfälliger Veränderungen Messwandlerspezifischer Schwingungseigenschaften, etwa infolge einer zusätzlichen, gelegentlich auch irreversiblen Deformierungen des in statischer Ruhelage befindlichen wenigstens einen Messrohrs aufgrund sich ändernder Temperaturverteilung innerhalb der Rohrwand oder aufgrund von auf das wenigstens eine Messrohr einwirkenden (Einspann-) Kräften bzw. daraus resultierenden zusätzlichen mechanische Spannungen innerhalb des Messwandlers entsprechenden Einflussgrößen Messtechnisch erfasst und entsprechend bei der Berechnung der Dichte entsprechend berücksichtigt werden, etwa durch Verrechnen entsprechender Korrekturterme mit der vorbezeichneten Kennlinienfunktion. Mechanischen Deformierungen des wenigstens einen Messrohrs können, wie auch in der eingangs erwähnten US-A 2011/0219872 gezeigt, beispielsweise mittels eines oder mehreren mit dem Messrohr über dessen vom Lumen abgewandten Oberfläche mechanisch gekoppelten Dehnungssensoren erfasst werden.

Weiterführende Untersuchungen haben ferner ergeben, dass zudem auch die durch Dissipation von Schwingungsenergie in Wärme bewirkte Dämpfung der Nutzschwingungen eine weitere Einflussgröße ist, die die als Nutzfrequenz dienende Resonanzfrequenz in einem nicht ohne weiteres vernachlässigbaren Ausmaß beeinflussen bzw. gegenüber der das Dichte-Messgerät ebenfalls eine gewisse Querempfindlichkeit aufweisen kann. Nachdem Änderungen nämlicher Dämpfung sowie damit einhergehende Änderungen der entsprechenden Resonanzfrequenz bei einem intakten Messwandler in erheblichem Maße auch durch Änderungen der Viskosität des jeweils zu messende Mediums bestimmt sind, derart, dass die jeweilige Resonanzfrequenz bei zunehmender Viskosität trotz konstant bleibender Dichte abnimmt, besteht eine Möglichkeit zur Korrektur solcher durch Änderungen der Dämpfung bedingten Änderungen der Resonanzfrequenz grundsätzlich auch darin, mittels der Messgerät-Elektronik zunächst die Viskosität zu ermitteln - beispielsweise, wie bereits erwähnt, basierend auf einer für die Anregung bzw. Aufrechterhaltung der Nutzschwingungen erforderlichen elektrischen Erregerleistung - und in wenigstens einen diese momentan repräsentierenden Viskositäts-Messwert und/oder in wenigstens einen eine davon abhängige Dämpfung der Nutzschwingungen repräsentierenden Dämpfungs-Wert abzubilden, um hernach den Dichte-Messwert unter Verwendung auch nämlichen Viskositäts-Messwerts bzw. nämlichen Dämpfungs-Werts sowie einer entsprechend erweiterten, nämlich auch die durch Änderungen der Viskosität bewirkten Änderung der Resonanzfrequenz mitberücksichtigenden Kennlinienfunktion zu ermitteln. Ein Nachteil einer solchen, auf einer Messung der Viskosität des im wenigstens einen Messrohr geführten Mediums bzw. einer davon abhängigen Dämpfung der Nutzschwingungen beruhenden Korrektur ist nicht zuletzt darin zu sehen, dass die Dämpfung nicht nur von der Viskosität sondern in einem gewissen Maße zudem auch von der eigentlich zu messenden, mithin zunächst unbekannten Dichte des Mediums abhängig ist. Infolgedessen können auch die unter Verwendung von mittels der Messgerät-Elektronik generierten Viskositäts- bzw. Dämpfungs-Werten ermittelten Dichte-Messwerte durchaus immer noch erhebliche, ggf. auch nach wie vor nicht tolerierbare Messabweichungen aufweisen.

Die Offenlegungsschrift DE 10 2008 046 891 A1 und das Patent US 5,533,381 lehren, die Schwingungsfrequenz zum Ermitteln der Dichte bei einem Phasenwinkel von 90° zwischen Erregerkraft und Auslenkung des Oszillators zu bestimmen.

Eine Aufgabe der Erfindung besteht daher darin, ein mittels wenigstens eines Messrohrs gebildets vibronisches Dichte-Messgerät anzugeben, das keine oder nur eine vernachlässigbar geringe Abhängigkeit der Dichte-Messgenauigkeit von Dämpfungen der Nutzschwingungen bzw. einer diese verursachenden Viskosität des Mediums aufweist.

Zur Lösung der Aufgabe besteht die Erfindung in einem Dichte-Messgerät, wie es im angefügten unabhängigen Patentanspruch 1 spezifiziert ist. Weitere Ausgestaltungen und Weiterbildungen sind in den abhängigen Patentansprüchen spezifiziert.

Ein Grundgedanke der Erfindung besteht darin, die Messgenauigkeit vibronischer Dichte-Messgeräte der in Rede stehenden Art dadurch zu verbessern, dass zwecks Messung der Dichte als Nutzschwingungen mechanischen Schwingungen des wenigstens einen Messrohrs mit einer von der momentanen Resonanzfrequenz abweichenden Nutzfrequenz angeregt werden, derart, dass der Phasenverschiebungswinkel zwischen der Geschwindigkeitsantwort und der die Nutzschwingungen bewirkenden Nutzkraftkomponente der Antriebskraft für ein für die Messung der Dichte benötigtes Zeitintervall signifikant von Null verschieden gehalten ist, nämlich während eines für das Einregeln des Phasenverschiebungswinkels sowie das Ausmessen der tatsächlichen Nutzfrequenz entsprechend benötigten Phasenregel-Intervalls auf einen innerhalb eines sich zwischen -30° und -70° erstreckenden Phasenwinkel-Nutzintervall liegenden, gleichwohl möglichst konstant gehaltenen Phasenwert eingestellt ist. Die Ermittlung der Dichte erfolgt demnach also basierend auf solchen Nutzschwingungen, bei denen die Resonanzbedingung tatsächlich nicht erfüllt ist bzw. bei denen die Nutzfrequenz einen Frequenzwert aufweist, der mehr als einem 1,00001-fachen, gleichwohl weniger als einem 1,001-fachen eines Frequenz-Referenzwerts, nämlich eines momentanen Frequenzwerts einer Referenz-Resonanzfrequenz, nämlich einer jeweils am nahesten benachbarten Resonanzfrequenz entspricht, beispielsweise also der Resonanzfrequenz des Biegeschwingungsgrundmodes. Für den erwähnten typischen Fall etwa, dass als Nutzschwingungen dem Biegeschwingungsgrundmode entsprechende Biegeschwingungen dienen sollen und die Resonanzfrequenz des Biegeschwingungsgrundmodes etwa bei 1000 Hz liegt, würde die Nutzfrequenz somit auf 1000,01 Hz bis 1001 Hz eingestellt sein, mithin würde ein entsprechender Frequenzversatz, um den die Nutzfrequenz gegenüber der Referenz-Resonanzfrequenz erhöht ist, etwa in einem Bereich zwischen 0,01 Hz bis 1 Hz liegen.

Die Erfindung basiert u.a. auf der überraschenden Erkenntnis, dass innerhalb dieses zwischen -30° und -70° liegenden, bei konventionellen Dichte-Messgeräten für die Messung der Dichte wie auch für die allfällige Messung des Massendurchflusses grundsätzlich aber vermiedenen Phasenwinkel-Nutzintervalls ein, ggf. auch Messgerät- oder Messgerätetypspezifischer Phasenverschiebungswinkels existiert, bei dem die Abhängigkeit der Nutzfrequenz von der Dämpfung der Nutzschwingungen bzw. der nämliche Dämpfung bewirkenden Viskosität des jeweils zu messenden Mediums minimal ist, jedenfalls aber im Vergleich zu nämlicher Abhängigkeit unter Resonanzbedingung erheblich geringer ausfällt.

Es hat sich ferner gezeigt, dass bei Anregung der Nutzschwingungen im vorbezeichneten Phasenwinkelbereich zwar deren Amplitude im Vergleich zur Amplitude unter Resonanzbedingungen bei ansonsten gleicher Erregerleistung in beträchtlichem Maße, nämlich durchaus um mehr als 50 % absinken kann - nicht zuletzt wegen der bei Messwandlern der Rede stehenden Art regelmäßig sehr hohen Gütefaktoren (Q) für natürliche Biegeschwingungsmoden des wenigstens einen Messrohrs, insb. nämlich auch dessen Biegeschwingungsgrundmode, von mehr als 1000 (Q>1000) bzw. regelmäßig sehr niedrigen Bandbreiten (B) für nämliche Biegeschwingungsmoden von weniger als einem Hunderstel einer jeweiligen Resonanzfrequenz -, dass überraschenderweise aber dennoch durch Auswerten der entsprechenden, nämlich nicht unter Resonanzbedingungen generierten Coriolisschwingungen eine nach wie vor hohe Messgenauigkeit für die Massendurchflussmessung erzielt werden kann; dies überraschenderweise sogar auch mit der in konventionellen Coriolis-Massendurchfluss-/Dichte-Messgeräten bis anhin eingesetzten, etablierten Messtechnik, nämlich sowohl mittels herkömmlicher Messwandler als auch mittels solchen Messgerät-Elektroniken, die zwar zwecks Realisierung der Erfindung hinsichtlich entsprechender Vorgabe- bzw. Sollwerte, nicht zuletzt auch für die damit realisierten Reglung zum Einstellen von Amplitude und Frequenz der Nutzschwingungen, gegenüber Messgerät-Elektroniken herkömmlicher Dichte-Messgeräte zu modifizieren sind, die ansonsten aber hinsichtlich des prinzipiellen Aufbaus und deren prinzipieller Wirkungsweise Messgerät-Elektroniken herkömmlicher Dichte-Messgeräte weitgehend entsprechen können.

Die Erfindung sowie weitere vorteilhafte Ausgestaltungen davon werden nachfolgend anhand von Ausführungsbeispielen näher erläutert, die in den Figuren der Zeichnung dargestellt sind. Gleiche Teile sind in allen Figuren mit denselben Bezugszeichen versehen; wenn es die Übersichtlichkeit erfordert oder es anderweitig sinnvoll erscheint, wird auf bereits erwähnte Bezugszeichen in nachfolgenden Figuren verzichtet.

Im einzelnen zeigen:

Fig. 1, 2     in unterschiedlichen Seitenansichten ein Ausführungsbeispiel für ein, insb. für die Verwendung in der industriellen Mess- und Automatisierungstechnik geeignetes, Dichte-Messgerät mit einem ein Messwandler-Gehäuse aufweisenden Messwandler vom Vibrationstyp und einer in einem am Messwandler-Gehäuse befestigten Elektronik-Gehäuse untergebrachten Messgerät-Elektronik;

Fig. 3     schematisch nach Art eines Blockschaltbilds ein Ausführungsbeispiel einer für ein Dichte-Messgerät gemäß Fig. 1, 2 geeignete Messgerät-Elektronik;

Fig. 4, 5     in unterschiedlichen Seitenansichten ein Ausführungsbeispiel eines für ein Dichte-Messgerät gemäß Fig. 1, 2 geeigneten Messwandlers vom Vibrationstyp mit einem Messrohr; und

Fig. 6, 7     Schwingungsbewegungen eines Messrohrs eines Messwandlers gemäß Fig. 4, 5 veranschaulichende Zeigerdiagramme;

Fig. 8, 9     Schwingungsbewegungen eines Messrohrs eines Messwandlers gemäß Fig. 4, 5 veranschaulichende Amplitudenfrequenzgänge in Abhängigkeit einer Dichte und/oder einer Viskosität eines in nämlichem Messrohr geführten Mediums;

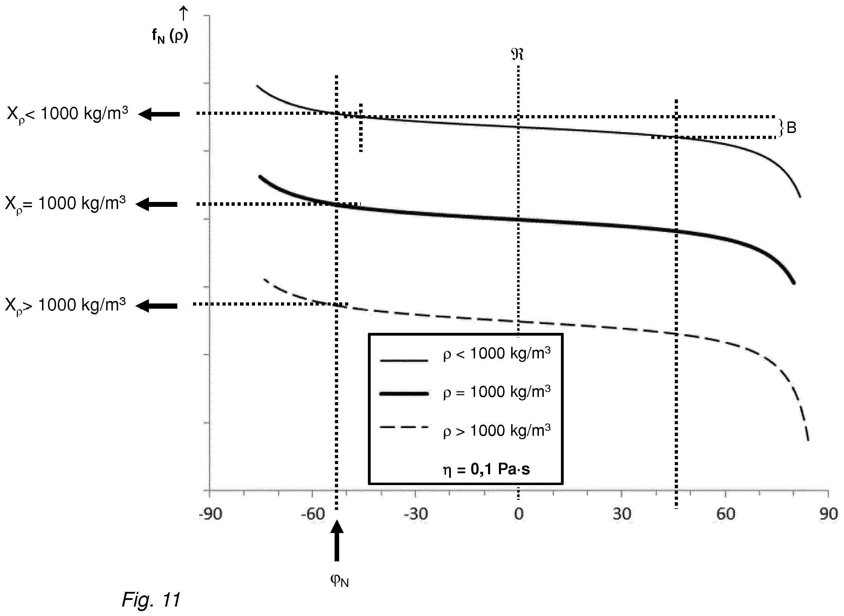

Fig. 10, 11     Schwingungsbewegungen eines Messrohrs eines Messwandlers gemäß Fig. 4, 5 veranschaulichende Phasenfrequenzgänge in Abhängigkeit einer Dichte und/oder einer Viskosität eines in nämlichem Messrohr geführten Mediums; und

Fig. 12     schematisch nach Art eines Blockschaltbilds ein Ausführungsbeispiel einer für ein Dichte-Messgerät gemäß Fig. 1, 2 geeigneten Phasenregelschleife (PLL);

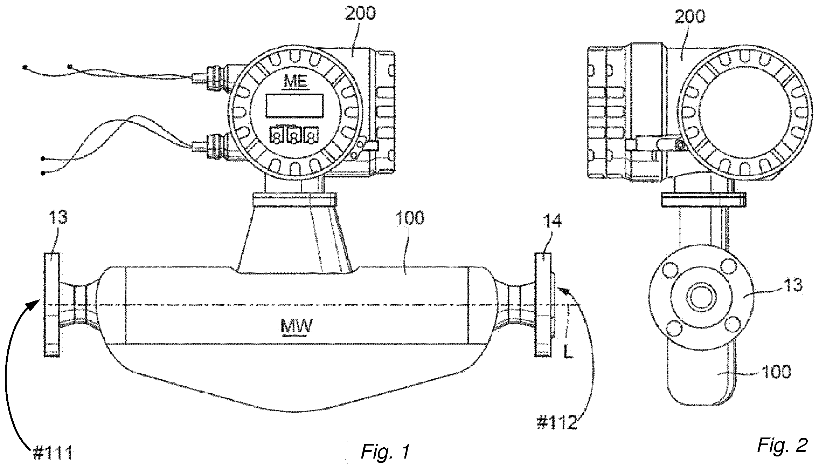

In den Fig. 1 und 2 - in unterschiedlichen Seitenansichten - ein Dichte-Messgerät zum Messen einer Dichte eines in einer - hier nicht dargestellten - Prozessleitung strömenden Mediums, insb. einer Flüssigkeit oder eines Gases, bzw. zum wiederkehrenden Ermitteln von nämliche Dichte momentan repräsentierenden Messwerten ($X_\rho$) schematisch dargestellt. Nach einer weiteren Ausgestaltung der Erfindung ist das Dichte-Messgerät ferner dafür vorgesehen, zusätzlich auch eine Viskosität des Mediums zu messen bzw. diese entsprechend repräsentierende Messwerte ($X_\eta$) zu ermitteln. Alternativ oder in Ergänzung dazu kann das Dichte-Messgerät ferner auch dafür eingerichtet sein, für das in der Rohrleitung strömenden einen Massendurchfluss, nämlich einer während eines vorgebbaren oder vorab bestimmten Messintervalls insgesamt geflossenen Masse, und/oder eine Massendurchflussrate zu ermitteln bzw. diese entspre-chend repräsentierende Messwerte ($X_m$) zu ermitteln.

Das Dichte-Messgerät umfasst einen über ein Einlassende #111 sowie ein Auslassende #112 an die, beispielsweise als Rohrleitung ausgebildete, Prozessleitung anschließbaren bzw. angeschlossenen Messwandler MW vom Vibrationstyp, welcher Messwandler im Betrieb entsprechend vom zu messenden Medium, wie etwa einer niedrigviskosen Flüssigkeit und/oder einer hochviskosen Paste und/oder einem Gas, durchströmt ist. Der Messwandler MW dient generell dazu, im jeweils hindurchströmenden Medium mechanische Reaktionskräfte, nämlich im Besonderen von der Dichte abhängige Trägheitskräfte, aber ggf. auch von einem Massendurchfluss abhängige Coriolis-Kräfte und/oder von einer Viskosität abhängige Reibungskräfte, zu erzeugen, die sensorisch erfassbar, mithin Messbar auf den Messwandler zurückwirken. Abgeleitet von diesen Reaktionskräften können so z.B. die Dichte $\rho$ und ggf. auch der Massedurchfluss m und/oder die Viskosität $\eta$ des Mediums gemessen werden. Der Messwandler MW ist ferner dafür eingerichtet, wenigstens ein Primärsignal zu generieren, das wenigstens einen von der Dichte abhängigen charakteristischen Signalparameter, insb. nämlich eine von der Dichte abhängige Signalfrequenz und/oder eine von der Dichte abhängige Signalamplitude und/oder einen von der Dichte abhängigen Phasenwinkel, aufweist. Desweiteren umfasst das Dichte-Messgerät eine mit nämlichem Messwandler MW elektrisch verbundene, insb. im Betrieb von extern via Anschlusskabel und/oder mittels interner Energiespeicher mit elektrischer Energie versorgte, Messgerät-Elektronik ME zum Erzeugen von die Dichte repräsentierenden Messwerten ($X_\rho$) bzw. zum Ausgeben eines solchen Messwerts als einen aktuell gültigen Messwert des Dichte-Messgeräts an einem entsprechenden Messausgang. Die, z.B. mittels wenigstens eines Mikroprozessors und/oder mittels eines digitalen Signalprozessors (DSP) gebildete, Messgerät-Elektronik ME kann, wie in den Fig. 1 angedeutet, beispielsweise in einem einzigen, ggf. auch gekammerten, Elektronik-Gehäuse 200 des Dichte-Messgeräts untergebracht sein. Nämliches Elektronik-Gehäuse 200 kann je nach Anforderung an das Dichte-Messgerät beispielsweise auch schlag- und/oder auch explosionsfest und/oder hermetisch dicht ausgebildet sein.

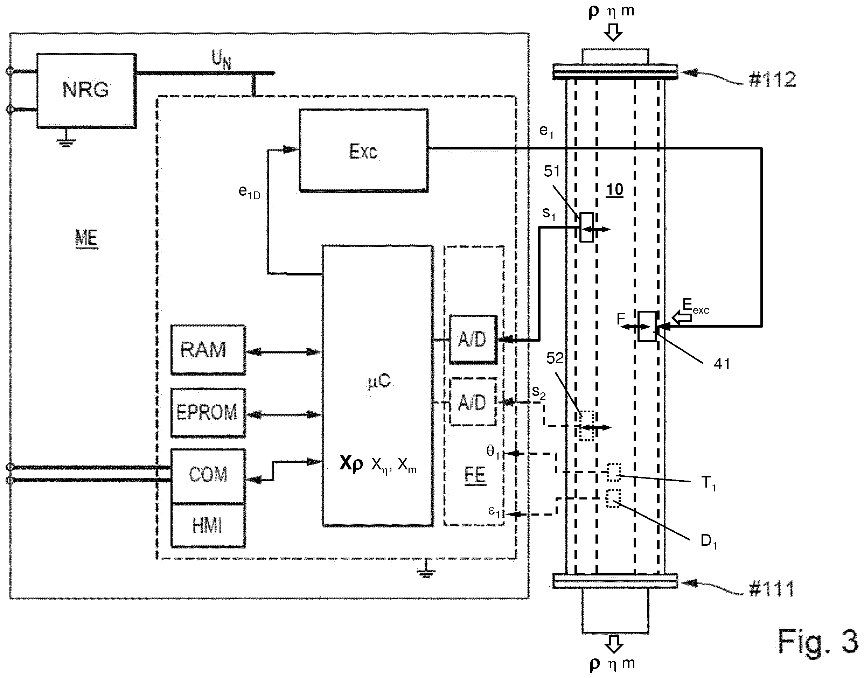

Die Messgerät-Elektronik ME weist, wie in Fig. 3 schematisch nach Art eines Blockschaltbildes dargestellt, eine dem Ansteuern des Messwandlers dienende Treiber-Schaltung Exc sowie eine Primärsignale des Messwandlers MW verarbeitende, beispielsweise mittels eines Mikroprozessors gebildete und/oder im Betrieb mit der Treiber-Schaltung Exc kommunizierende, Mess- und Auswerte-Schaltung $\mu C$ auf, die im Betrieb zumindest die Dichte, ggf. aber auch den momentanen oder einen totalisierten Massendurchfluss und/oder die Viskosität, repräsentierende Messwerte generiert. Im übrigen kann die Messgerät-Elektronik auch so ausgebildet sein, dass sie hinsichtlich des Schaltungsaufbaus einer der aus dem eingangs erwähnten Stand der Technik, beispielsweise etwa der US-B 63 11 136, bekannten Messgerät-Elektroniken oder beispielsweise auch einem Messumformer eines seitens der Anmelderin, z.B. unter der Bezeichung "PROMASS 83F" bzw. auf http://www.de.endress.com/#product/83F ,angebotenen Coriolis-Massendurchfluss/-Dichte-Messgeräts entspricht.

Die mittels der Messgerät-Elektronik ME generierten Messwerte können beim hier gezeigten Dichte-Messgerät beispielsweise auch vor Ort, nämlich unmittelbar an der mittels des Dichte-Messgeräts gebildeten Messstelle, angezeigt werden. Zum Visualisieren von mittels des Dichte-Messgeräts erzeugten Messwerten und/oder gegebenenfalls Messgerät intern generierten Systemstatusmeldungen, wie etwa einer erhöhte Messungenauigkeit bzw. - unsicherheit signalisierende Fehlermeldung oder einem eine Störung im Dichte-Messgerät selbst oder an der mittels des Dichte-Messgeräts gebildeten Messstelle signalisierenden Alarm, vor Ort kann das Dichte-Messgerät, wie auch Fig. 1 angedeutet, beispielsweise ein mit der Messgerät-Elektronik kommunizierendes, ggf. auch portables, Anzeige- und Bedienelement HMI aufweisen, wie etwa ein im Elektronikgehäuse 200 hinter einem darin entsprechend vorgesehenen Fenster platziertes LCD-, OLED- oder TFT-Display sowie eine entsprechende Eingabetastatur und/oder ein Touchscreen.

In vorteilhafter Weise kann die, beispielsweise auch (re-)programmier- bzw. fernparametrierbare, Messgerät-Elektronik ME zudem so ausgelegt sein, dass sie im Betrieb des Dichte-Messgeräts mit einem diesem übergeordneten elektronischen Datenverarbeitungssystem, beispielsweise einer speicherprogrammierbaren Steuerung (SPS), einem Personalcomputer und/oder einer Workstation, via Datenübertragungssystem, beispielsweise einem Feldbussystem, wie etwa FOUNDATION FIELDBUS, PROFIBUS, und/oder drahtlos per Funk, Mess- und/oder andere Betriebsdaten austauschen kann, wie etwa aktuelle Messwerte, Systemdiagnosewerte, Systemstatusmeldungen oder aber auch der Steuerung des Dichte-Messgeräts dienende Einstellwerte. Wie bei dem in der Fig. 3 gezeigten Ausführungsbeispiel gezeigt, kann insb. nämlich auch die Mess- und Auswerteschaltung $\mu C$ mittels eines in der Messgerät-Elektronik ME vorgesehenen, beispielsweise mittels Mikroprozessors bzw. eines digitalen Signalprozessors (DSP) realisierten, Mikrocomputers und mittels in diesen entsprechend implementierter und darin ablaufender Programm-Codes realisiert sein. Die Programm-Codes wie auch weitere der Steuerung des Dichte-Messgeräts dienliche Betriebsparameter, wie z.B. auch Sollwerte für mittels der Messgerät-Elektronik realisierte Regler bzw. Regleralgorithmen, können z.B. in einem nicht-flüchtigen Datenspeicher EEPROM der Messgerät-Elektronik ME persistent gespeichert sein und beim Starten desselben in einen, z.B. im Mikrocomputer integrierten, flüchtigen Datenspeicher RAM geladen werden. Für derartige Anwendungen geeignete Mikroprozessoren sind z.B. solche vom Typ TMS320VC33, wie sie von der Firma Texas Instruments Inc. am Markt angeboten sind.

Des weiteren kann die Messgerät-Elektronik ME so ausgelegt sein, dass sie von einer externen Energieversorgung, beispielsweise auch über das vorgenannte Feldbussystem, gespeist werden kann. Darüber hinaus kann die Messgerät-Elektronik ME beispielsweise eine solche interne Energieversorgungsschaltung NRG zum Bereitstellen interner Versorgungsspannungen $U_N$ aufweisen, die im Betrieb von einer im vorgenannten Datenverarbeitungssystem vorgesehenen externen Energieversorgung über das vorgenannte Feldbussystem gespeist wird. Hierbei kann das Dichte-Messgerät beispielsweise als sogenanntes Vierleitergerät ausgebildet sein, bei dem die interne Energieversorgungsschaltung der Messgerät-Elektronik ME mittels eines ersten Paars Leitungen mit einer externen Energieversorgung und die interne Kommunikationsschaltung der Messgerät-Elektronik ME mittels eines zweiten Paars Leitungen mit einer externen Datenverarbeitungsschaltung oder einem externen Datenübertragungssystem verbunden werden kann. Die Messgerät-Elektronik kann ferner aber auch so ausgebildet, dass sie, wie u.a auch in der eingangs erwähnten US-B 72 00 503, die US-B 77 92 646 gezeigt, mittels einer, beispielsweise als 4-20 mA-Stromschleife konfigurierten, Zweileiter-Verbindung mit dem externer elektronischen Datenverarbeitungssystem elektrisch verbindbar ist und darüber mit elektrischer Energie versorgt werden sowie Messwerte zum Datenverarbeitungssystem übertragen kann. Für den typischen Fall, dass das Dichte-Messgerät für eine Ankopplung an ein Feldbus- oder ein anderes elektronisches Kommunikationssystem vorgesehen ist, kann die, beispielsweise auch vor Ort und/oder via Kommunikationssystem (re-)programmierbare, Messgerät-Elektronik ME zu dem eine entsprechende - beispielsweise einem der einschlägigen Industriestandards, wie etwa der IEC 61158/IEC 61784, konforme - Kommunikations-Schnittstelle COM für eine Datenkommunikation aufweisen, z.B. zum Senden von Mess- und/oder Betriebsdaten, mithin den die Dichte repräsentierenden Messwerte und ggf. auch den die Viskosität, Massendurchfluss bzw. die Massendurchflussrate repräsentierenden Messwerte, an die bereits erwähnte speicherprogrammierbare Steuerung (SPS) oder ein übergeordnetes Prozessleitsystem und/oder zum Empfangen von Einstelldaten für das Dichte-Messgerät.

Das elektrische Anschließen des Messwandlers an die Messgerät-Elektronik kann mittels entsprechender Anschlussleitungen erfolgen, die aus dem Elektronik-Gehäuse 200, beispielsweise via Kabeldurchführung, in ein Messwandler-Gehäuse 100 des Messwandlers geführt und zumindest abschnittsweise innerhalb nämlichen Messwandler-Gehäuses 200 verlegt sind. Die Anschlussleitungen können dabei zumindest anteilig als elektrische, zumindest abschnittsweise in von einer elektrischen Isolierung umhüllte Leitungsdrähte ausgebildet sein, z.B. inform von "Twisted-pair"-Leitungen, Flachbandkabeln und/oder Koaxialkabeln. Alternativ oder in Ergänzung dazu können die Anschlussleitungen zumindest abschnittsweise auch mittels Leiterbahnen einer, beispielsweise flexiblen, gegebenenfalls auch lackierten Leiterplatte gebildet sein, vgl. hierzu auch die eingangs erwähnten US-B 67 11 958 oder US-A 53 49 872.

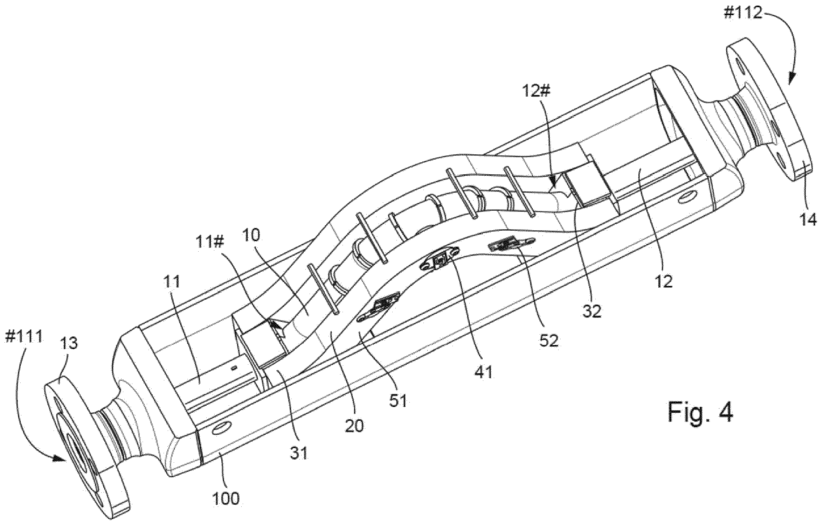

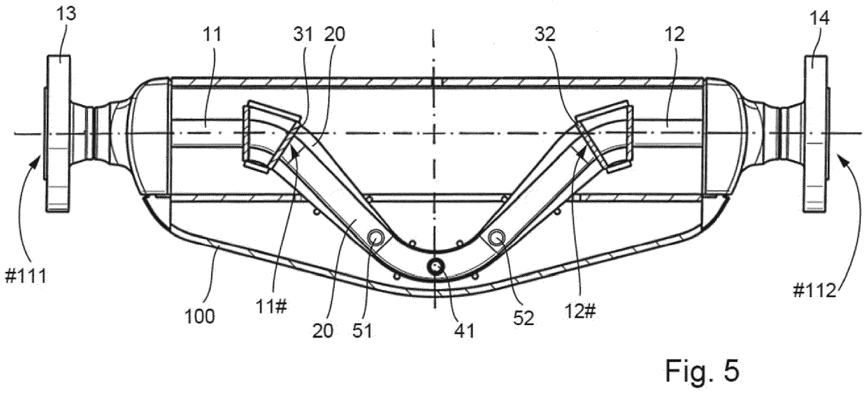

In den Fig. 4 und 5 ist ein Ausführungsbeispiel für einen für die Realisierung des erfindungsgemäßen Dichte-Messgeräts geeigneten Messwandlers MW vom Vibrationstyp schematisch dargestellt. Der Messwandler umfasst ein in einem Messwandler-Gehäuse 100 angeordnetes, die physikalisch-elektrische Konvertierung der Dichte und ggf. auch der Viskiosität bzw. der Massendurchflussrate eigentlich bewirkendes Innenteil. Nämliches, nicht zuletzt auch als eine das Innere des Messwandlers MW zur umgebenden Atmosphäre hin hermetisch abdichtende, ggf. auch druck- und/oder explosionsfest verschließende Schutzhülle dienendes, Messwandler-Gehäuse 100 kann beispielsweise aus einem - glatten oder auch gewellten - Edelstahlblech oder auch einem Kunststoff gefertigt sein. Ferner kann das Messwandler-Gehäuse 100, wie auch in Fig. 1 angedeutet, einen Anschlussstutzen aufweisen, an dem das Elektronik-Gehäuse 200 unter Bildung eines Messgeräts in Kompaktbauweise montiert ist. Innerhalb des Anschlussstutzens kann des Weiteren eine, beispielsweise mittels Glas- und/oder Kunststoffverguss hergestellte, hermetisch dichte und/oder druckfeste Durchführung für zwischen der Messgerät-Elektronik und Messwandlers verlegte elektrische Anschlussleitungen angeordnet sein.

Zum Führen von strömendem Mediums umfasst das Innenteil, mithin der damit gebildete Messwandler MW prinzipiell wenigstens ein - im in den Fig. 4 und 5 gezeigten Ausführungsbeispiel nämlich ein einziges zumindest abschnittsweise gekrümmtes - Messrohr 10 mit einem von einer Rohrwand umgebenen Lumen. Die Rohrwand des wenigstens einen Messrohrs kann beispielsweise aus einem Metall, etwa Titan bzw. einer Titanlegierung, Tantal bzw. einer Tantallegierung, Zirkonium bzw. einer Zirkoniumlegierung, einem Edelstahl oder einer Nickelbasislegierung, oder beispielsweise auch aus Silizium bestehen. Das wenigstens eine Messrohr 10 erstreckt sich, wie aus den Fig. 4 und 5 ersichtlich, zwischen einem einlassseitigen ersten Messrohrende 11# und einem auslassseitigen zweiten Messrohrende 12# mit einer Schwinglänge und ist dafür eingerichtet, in seinem Lumen zu messendes Medium zu führen und währenddessen, nicht zuletzt zum Erzeugen von von der Dichte abhängigen Trägheitskräften, über seine Schwinglänge vibrieren gelassen zu werden, derart, dass das Messrohr 10 zumindest anteilig und/oder zumindest zeitweise Nutzschwingungen, nämlich mechanische Schwingungen, insb. Biegeschwingungen, um eine Ruhelage mit einer, insb. von der Dichte des Mediums mitbestimmten bzw. abhängigen, Nutzfrequenz, $f_N$, ausführt, einhergehend mit einer entsprechend wiederholten elastischen Verformung der Rohrwand. Die Schwinglänge entspricht im in Fig. 4 bzw. 5 gezeigten Ausführungsbeispiel einer vom Messrohrende 11# zum Messrohrende 12# gemessenen Länge einer innerhalb von Lumen verlaufenden gedachten Mittel- oder auch Schwerelinie, nämlich einer gedachten Verbindungslinie durch die Schwerpunkte aller Querschnittsflächen des Messrohrs, bzw. - im Falle eines gekrümmten Messrohrs - einer gestreckten Länge des Messrohrs 10. Wie aus der Zusammenschau der Fign. 4 und 5 ohne weiteres ersichtlich, kann das wenigstens eine Messrohr 10 so geformt sein, dass vorgenannte Mittellinie, wie bei Messwandlern der in Rede stehenden Art durchaus üblich, in einer gedachten Rohrebene des Messwandlers liegt.

Nach einer Ausgestaltung der Erfindung sind die Nutzschwingungen des wenigstens einen Messrohr 10 so ausgebildet, mithin wird das wenigstens eine Messrohr 10 im Betrieb so vibrieren gelassen, dass nämliches Messrohr 10 über die gesamte Schwinglänge Schwingungsbewegungen um eine gedachte Schwingungsachse ausführt, die zu einer die beiden Messrohrenden 11#, 12# imaginär verbindenden gedachten Verbindungsachse parallel oder koinzident ist. Die Nutzschwingungen können beispielsweise einer Schwingungsform eines natürlichen Biegeschwingungsmodes, beispielsweise einem Biegeschwingungsgrundmode, des wenigstens Messrohrs entsprechen, mithin Biegeschwingungen um nämliche Schwingungsachse sein. Das wenigstens eine Messrohr 10 kann in vorteilhafter Weise ferner so geformt und im Messwandler angeordnet sein, dass vorgenannte Verbindungsachse im Ergebnis im Wesentlichen parallel zu einer Ein- und Auslassende des Messwandlers imaginär verbindenden gedachten Längsachse L des Messwandlers verläuft, ggf. auch mit nämlicher Längsachse L koinzidiert. Darüber hinaus kann das wenigstens eine - nicht zuletzt zwecks Erzielung einer hohen mechanischen Beständigkeit, gleichwohl auch zwecks Erzielung eines hohen Gütefaktors Q ($Q = f_R / B$) von mehr als 1000 ($Q > 1000$) zumindest für den Biegeschwingungsgrundmode des von Wasser durchströmten wenigstens einen Messrohrs 10, mithin einer niedrigen Bandbreite B ($B = f_R / Q$) von weniger als einem Hunderstel von der momentaner Resonanzfrequenz $f_R$ ($B < 0{,}01 \cdot f_R$) nämlichen Biegeschwingungsgrundmodes beispielsweise aus Titan, Tantal bzw. Zirkonium oder einer Legierung davon, einer Nickelbasislegierung oder einem Edelstahl hergestellte - Messrohr 10 des Messwandlers und insoweit auch eine innerhalb von Lumen verlaufende gedachte Mittellinie des Messrohrs 10 z.B. im Wesentlichen U-förmig oder, wie auch in der Fig. 4 und 5 gezeigt, im Wesentlichen V-förmig ausgebildet sein. Da der Messwandler MW für eine Vielzahl unterschiedlicher Anwendungen, insb. im Bereich der industriellen Mess- und Automatisierungstechnik einsetzbar sein soll, ist ferner vorgesehen, dass das wenigstens einen Messrohr ein Kaliber (Innendurchmesser) aufweist, das größer als 1 mm, insb. größer als 10 mm ist, gelegentlich sogar mehr als 80 mm aufweisen kann. Nicht zuletzt bei Verwendung eines in Mikrosystemtechnik (MEMS) hergestellten Messwandler, beispielsweise nämlich mit einem Messrohr aus Silizium oder Titan, kann das Kaliber des wenigstens einen Messrohrs, wie auch in den eingangs erwähnten US-B 64 77 901, US-B 66 47 778 bzw. US-B 70 59 176 erwähnt, aber durchaus auch kleiner als 1 mm, insb. auch kleiner als 0,5 mm, gewählt sein.

Für den in Fig. 4 und 5 gezeigten Fall, dass das Innenteil mittels eines einzigen Messrohrs gebildet ist, mithin außer dem Messrohr 10 kein weiteres Messrohr zum Führen des Mediums aufweist, kann das Innenteil des Messwandlers, wie hier gezeigt des Weiteren einen mechanisch mit dem (einzigen) - hier gekrümmten - Messrohr 10 gekoppelten, beispielsweise auch ähnlich wie das Messrohr 10 U- bzw. V-förmige ausgebildeten, Gegenschwinger 20 zur Minimierung von auf das Innenteil wirkenden Störeinflüssen wie auch zur Reduzierung von seitens des jeweiligen Messwandlers an die angeschlossene Prozessleitung insgesamt abgegebener Schwingungsenergie umfassen. Nämlicher Gegenschwinger 20 ist vom Messrohr 10 seitlich beabstandet und unter Bildung einer - letztlich vorgenanntes erstes Messrohrende 11# definierenden - ersten Kopplungszone einlassseitig und unter Bildung einer - letztlich vorgenanntes zweites Messrohrende 12# definierenden - zweiten Kopplungszone auslassseitig jeweils am Messrohr 10 fixiert. Der - hier im Wesentlichen parallel zum Messrohr 10 verlaufende - Gegenschwinger 20 ist in vorteilhafter Weise aus einem zum Messrohr 10 hinsichtlich des Wärmeausdehnungsverhaltens kompatiblen Metall, wie etwa Stahl, Titan bzw. Zirkonium, hergestellt. Wie in Fig. 2 dargestellt oder u.a. auch in der bereits erwähnten US-B 73 60 451 vorgeschlagen, kann der Gegenschwinger 20 beispielsweise mittels links- und rechtsseitig des Messrohrs 10 angeordneten Platten oder auch links- und rechtsseitig des Messrohrs 10 angeordneten (Blind-) Rohren gebildet sein. Alternativ dazu kann der Gegenschwinger 20 - wie etwa in der erwähnten US-B 66 66 098 vorgeschlagen - auch mittels eines einzigen seitlich des Messrohrs und parallel dazu verlaufenden (Blind-) Rohrs gebildet sein. Wie aus einer Zusammenschau der Fign. 4 und 5 ersichtlich, ist der Gegenschwinger 20 im hier gezeigten Ausführungsbeispiel mittels wenigstens eines einlassseitigen ersten Kopplers 31 am ersten Messrohrende 11# und mittels wenigstens eines auslassseitigen, insb. zum Koppler 31 im Wesentlichen identischen, zweiten Kopplers 32 am zweiten Messrohrende 12# gehaltert. Als Koppler 31, 32 können hierbei z.B. einfache Knotenplatten dienen, die in entsprechender Weise einlassseitig und auslassseitig jeweils an Messrohr 10 und Gegenschwinger 20 befestigt sind. Ferner kann - wie bei dem in den Fig. 4 und 5 gezeigten Ausführungsbeispiel vorgeschlagen - ein mittels in Richtung der gedachten Längsachse L des Messwandlers voneinander beabstandeten Knotenplatten zusammen mit überstehenden Enden des Gegenschwinger 20 einlassseitig und auslassseitig jeweils gebildeter, vollständig geschlossener Kasten oder ggf. auch teilweise offener Rahmen als Koppler 31 bzw. als Koppler 32 dienen.

Wie aus den Fig. 4 und 5 zudem ersichtlich, ist das Messrohr 10 im hier gezeigten Ausführungsbeispiel ferner über ein einlassseitig im Bereich der ersten Kopplungszone einmündendes gerades erstes Verbindungsrohrstück 11 und über ein auslassseitig im Bereich der zweiten Kopplungszone einmündendes, insb. zum ersten Verbindungsrohrstück 11 im Wesentlichen identisches, gerades zweites Verbindungsrohrstück 12 entsprechend an die das Medium zu- bzw. abführende Prozessleitung angeschlossen, wobei ein Einlassende des einlassseitigen Verbindungsrohrstück 11 praktisch das Einlassende des Messwandlers und ein Auslassende des auslassseitigen Verbindungsrohrstück 12 das Auslassende des Messwandlers bilden. In vorteilhafter Weise können das Messrohr 10 und zusammen mit den beiden Verbindungsrohrstücken 11, 12 einstückig ausgeführt sein, so dass zu deren Herstellung z.B. ein einziges rohrförmiges Halbzeug aus einem für solche Messwandler üblichen Material, wie z.B. Edelstahl, Titan, Zirkonium, Tantal oder entsprechenden Legierungen davon, dienen kann. Im in den Fig. 4 und 5 gezeigten Ausführungsbeispiel ist ferner vorgesehen, dass die beiden Verbindungsrohrstücke 11, 12, so zueinander sowie zu einer die beiden Kopplungszonen imaginär verbindenden gedachten Längsachse L des Messwandlers ausgerichtet sind, dass das hier mittels Gegenschwinger 20 und Messrohr 10 gebildete Innenteil um die Längsachse L pendeln kann, einhergehend mit entsprechenden Verdrillungen der beiden Verbindungsrohrstücke 11, 12. Dafür sind die beiden Verbindungsrohrstücke 11, 12 so zueinander ausgerichtet, dass sie im Wesentlichen parallel zur gedachten Längsachse L bzw. zur erwähnten gedachten Schwingungsachse verlaufen bzw. dass die Verbindungsrohrstücke 11, 12 sowohl zur Längsachse L als auch zueinander im Wesentlichen fluchten. Da die beiden Verbindungsrohrstücke 11, 12 im hier gezeigten Ausführungsbeispiel praktisch über ihre gesamte Länge hinweg im Wesentlichen gerade ausgeführt sind, sind sie dementsprechend insgesamt zueinander sowie zur imaginären Längsachse L im Wesentlichen fluchtend ausgerichtet. Das, insb. im Vergleich zum Messrohr 10 biege- und torsionssteife, Messwandler-Gehäuse 100 ist, insb. starr, an einem bezüglich der ersten Kopplungszone distalen Einlassende des einlassseitigen Verbindungsrohrstücks 11 sowie an einem bezüglich der zweiten Kopplungszone distalen Auslassende des auslassseitigen Verbindungsrohrstück 12 fixiert, derart, dass das gesamte - hier mittels Messrohr 10 und Gegenschwinger 20 gebildete - Innenteil nicht nur vom Messwandler-Gehäuse 100 vollständig umhüllt, sondern infolge seiner Eigenmasse und der Federwirkung beider Verbindungsrohrstücke 11, 12 im Messwandler-Gehäuse 100 auch schwingfähig gehaltert ist.

Für den typischen Fall, dass der Messwandler MW lösbaren mit der, beispielsweise als metallische Rohrleitung ausgebildeten, Prozessleitung zu montieren ist, sind einlassseitig des Messwandlers einer erster Anschlussflansch 13 für den Anschluss an ein Medium dem Messwandler zuführendes Leitungssegment der Prozessleitung und auslassseitig ein zweiter Anschlussflansch 14 für ein Medium vom Messwandler abführendes Leitungssegment der Prozessleitung vorgesehen. Die Anschlussflansche 13, 14 können dabei, wie bei Messwandlern der beschriebenen Art durchaus üblich auch endseitig in das Messwandler-Gehäuse 100 integriert, nämlich als integraler Bestandteil des Messwandler-Gehäuses ausgebildet sein. Beispielsweise können der erste Anschlussflansch 13 dem einlassseitigen Verbindungsrohrstück 11 an dessen Einlassende und der zweite Anschlussflansch 14 dem auslassseitigen Verbindungsrohrstück 12 an dessen Auslassende mittels entsprechender Löt- bzw. Schweißverbindung angeformt sein.

Zum aktiven Anregen und Aufrechterhalten mechanischer Schwingungen des wenigstens einen Messrohrs 10, nicht zuletzt auch den erwähnten Nutzschwingungen, umfassen die Messgerät-Elektronik ME, wie bereits erwähnt, eine Treiber-Schaltung Exc und der Messwandler MW wenigstens einen an die Treiber-Schaltung Exc elektrisch angeschlossenen, elektromechanischen Schwingungserreger 41. Der wenigstens eine - hier einzige auf das wenigstens eine Messrohr 10 einwirkende - Schwingungserreger 41 kann beispielsweise so platziert sein, dass er, wie auch in Fig. 4 und 5 angedeutet und wie bei Messwandlern der in Rede stehenden Art durchaus üblich, mittig des Messrohrs, nämlich im Bereich einer halben Schwinglänge gebildet auf das wenigstens Messrohr 10 einwirkt. Nach einer weiteren Ausgestaltung der Erfindung ist vorgesehen, das wenigstens eine Messrohr 10 im Betrieb mittels des wenigstens einen Schwingungerregers 41 zumindest zeitweise zu Nutzschwingungen aktiv anzuregen, die überwiegend oder ausschließlich als Biegeschwingungen um die erwähnte gedachte Schwingungsachse ausgebildet sind. Im Besonderen ist hierbei ferner vorgesehen, dass das wenigstens eine Messrohr 10, wie bei derartigen Messwandlern mit gekrümmtem Messrohr durchaus üblich, mittels des Schwingungerregers 41 zu solchen Biegeschwingungen angeregt ist, bei denen sich das wenigstens eine um nämliche Schwingungsachse - etwa nach Art eines einseitig eingespannten Auslegers - oszillierende Messrohr 10 zumindest anteilig gemäß einer Schwingungsformen eines natürlichen Biegeschwingungsgrundmodes ausbiegt, derart, dass die Biegeschwingungen, mithin die Nutzschwingungen des Messrohrs dabei lediglich im Bereich der das einlassseitige Messrohrende 11# definierenden einlassseitigen Kopplungszone einen einlassseitigen Schwingungsknoten und im Bereich der das auslassseitige Messrohrende 12# definierenden auslassseitigen Kopplungszone einen auslassseitigen Schwingungsknoten aufweisen.

Nach einer weiteren Ausgestaltung der Erfindung ist der Schwingungserreger 41 als elektrodynamischer Schwingungserreger ausgestaltet, nämlich nach Art einer Schwingspule aufgebaut, derart, dass der Schwingungserreger 41 eine an die Treiber-Schaltung Exc, mithin an die damit gebildet Messgerät-Elektronik ME elektrisch angeschlossene zylindrische Erregerspule sowie einen dauermagnetischen, mithin ein Magnetfeld führenden Anker aufweist, und dass nämliches Magnetfeld mit einem mittels des Erregersignals in der Erregerspule generierten (Wechsel-) Magnetfelds in einer Relativbewegungen von Anker und Erregerspule bewirkenden Weise wechselwirkt. Im Falle eines mittels Gegenschwinger und Messrohr gebildeten Innenteils können die Erregerspule beispielsweise am Gegenschwinger 20 und der Anker von außen am Messrohr 10 fixiert sein. Der Schwingungserreger 41 kann aber beispielsweise auch als ein elektrostatischer, nämliche mittels eines Kondensators, von dem eine erste Kondensatorplatte am Messrohr und eine zweite Kondensatorplatte am Gegenschwinger oder - wie nicht zuletzt bei mittels eines Messrohrs mit sehr kleinem Kaliber von weniger als 1 mm gebildeten Messwandlern durchaus üblich am jeweiligen Messwandler-Gehäuse fixiert sein können, gebildeter Schwingungserreger oder auch als piezoelektrischer Schwingungserreger ausgestaltet sein.

Für den erwähnten Fall, dass die aktiv angeregten Nutzschwingungen Biegeschwingungen des Messrohrs sind, können diese bei dem in Fig. 4 und 5 gezeigten Ausführungsbeispiel entsprechenden, nämlich ein mittels Messrohr 10 und Gegenschwinger 20 gebildetes Innenteil aufweisenden Messwandler in vorteilhafter Wiese so ausgebildet sein, dass das Messrohr 10 Schwingungsbewegungen ausführt, die einen relativen Abstand zwischen Messrohr 10 und Gegenschwinger 20 mit Nutzfrequenz $f_N$ periodisch ändern. Im Falle eines gleichzeitig, beispielsweise differentiell, sowohl auf Messrohr als auch Gegenschwinger wirkenden Schwingungserregers kann dabei auch der Gegenschwinger 20 zu simultanen Auslegerschwingungen angeregt werden, beispielsweise auch so, dass er zu den Nutzschwingungen frequenzgleiche Schwingungen, beispielsweise Biegeschwingungen um eine zur erwähnten Längsachse L parallele gedachte Schwingungsachse, ausführt, die zumindest anteilig, nämlich insb. im Bereich des mittels des Schwingungserregers 41 gebildeten Angriffspunktes, und/oder zumindest zeitweise, nämlich bei nicht von Medium durchströmtem Messrohr, im Wesentlichen gegenphasig zum Messrohr 10 sind. Die Schwingungen des Gegenschwingers 20 können dabei so ausgebildete sein, dass sie von gleicher modaler Ordnung wie die Nutzschwingungen sind. Anders gesagt, können sich dann Messrohr 10 und Gegenschwinger 20 nach Art gegeneinander schwingender Stimmgabelzinken bewegen.

Die Treiber-Schaltung Exc, mithin die damit gebildete Messgerät-Elektronik des erfindungsgemäßen Dichte-Messgeräts ist ferner dafür eingerichtet, ein (analoges) elektrisches Erregersignal $e_1$ zu generieren und mittels nämlichen Erregersignals $e_1$ elektrische Leistung $E_{exc}$ in den Schwingungserreger 41 einzuspeisen. Das Erregersignal $e_1$ kann, wie bei Dichte-Messgeräten der in Rede stehenden Art durchaus üblich, ein zumindest zeitweise harmonisches elektrisches Wechselsignal mit einer eingeprägten Wechselspannung und/oder einem eingeprägten Wechselstrom sein. Zum Einstellen einer der anzuregenden Nutzfrequenz entsprechenden Signalfrequenz für das Erregersignal kann in der Treiberschaltung beispielsweise eine digitalen Phasen-Regelschleife (PLL - *phase locked loop*) vorgesehen sein, während eine einen Betrag nämlicher Erregerkräfte bestimmende Stromstärke des Erregersignals beispielsweise mittels eines entsprechenden, ggf. digitalen Stromreglers der Treiberschaltung passend eingestellt werden kann. Der prinzipielle Aufbau und die Verwendung solcher Phasenregeschleifen zum aktiven Anregen von Messrohren auf einer vorgegebenen Nutzfrequenz ist dem Fachmann an und für sich bekannt. Die Generierung des Erregersignal $e_1$ kann beispielsweise auch basierend auf einem mittels der Mess- und Auswerte-Schaltung $\mu C$ zunächst generierten digitalen Steuersignals $e_{1D}$ erfolgen, mittels dem im Betrieb beispielsweise eine in der Treiber-Schaltung Exc enthaltener, letztlich das Erregersignals $e_1$ bereitstellender Leistungsverstärker angesteuert wird. Das digitale Steuersignal $e_{1D}$ kann beispielsweise ein mittels eines numerischen gesteuerten Oszillators (NCO) generiertes, beispielsweise auch sinusförmiges, Digitalsignal sein. Die Messgerät-Elektronik ME kann z.B. zudem auch ausgestaltet sein, das Erregersignal in der Weise zu regeln, dass die Nutzschwingungen eine gleichbleibende, mithin auch von der Dichte $\rho$ bzw. auch der Viskosität $\eta$ des jeweils zu messenden Mediums weitgehend unabhängige Amplitude aufweisen. Selbstverständlich können auch andere für das Einstellen der elektrischen Erregerleistung bzw. der passenden Signalfrequenz des Erregersignals geeignete, dem Fachmann an und für sich, beispielsweise auch aus eingangs erwähnten US-A 48 01 897, US-A 50 24 104, bzw. US-A 63 11 136, bekannte Treiberschaltungen zur Realsierung des erfindungsgemäßen Dichte-Messgräts verwendet werden.

Der Schwingungserreger 41 wiederum dient dazu bzw. ist dafür eingerichtet, mittels nämlichen Erregersignals e1 eingespeiste elektrische Leistung $E_{exc}$ in eine an einem mittels des Schwingungserregers 41 gebildeten (Kraft-) Angriffspunkt auf das wenigstens eine Messrohr wirkende und dieses in der vorbeschriebenen Weise auslenkende bzw. Schwingungen des wenigstens eine Messrohrs anregende, mithin von der eingespeisten elektrische Leistung $E_{exc}$ abhängige Antriebskraft F umzuwandeln, wobei die (naturgemäß vektorielle) Antriebskraft F zwecks einer gezielten Anregung der Nutzschwingungen so ausgebildet ist, dass sie eine in das wenigstens eine Messrohr 10 eingeleitete Nutzkraftkomponente $F_N$, nämlich eine sich mit einer der Nutzfrequenz $f_N$, entsprechenden Anregungsfrequenz ändernde, letztlich die Nutzschwingungen bewirkende periodische Kraftkomponente, aufweist. Ergänzend sei hinsichtlich Aufbau und Wirkungsweise solcher für das erfindungsgemäße Dichte-Messgerät geeigneter Treiberschaltungen auf die mit Messumformern der Serie "PROMASS 83F" bereitgestellte Messgerät-Elektroniken verwiesen, wie sie von der Anmelderin beispielsweise in Verbindung mit Messwandlern der Serie "PROMASS F" angeboten werden. Deren Treiberschaltung ist beispielsweise jeweils auch so ausgeführt, dass die jeweiligen Nutzschwingungen auf eine konstante, also auch von der Dichte $\rho$ bzw. von der Viskosität $\eta$ weitgehend unabhängige Amplitude geregelt werden.

Zum Erfassen von Schwingungen des Messrohrs 10, nicht zuletzt auch den angeregten Nutzschwingungen bzw. der damit korrespondierenden Geschwindigkeitsantwort, umfasst der Messwandler weiters einen, beispielsweise mittels eines - hier aus Gründen besserer Übersichtlichkeit ebenfalls nicht gezeigten - weiteren Paares von Anschlussdrähten, an die Messgerät-Elektronik ME elektrisch angeschlossenen ersten Schwingungssensor 51. Der Schwingungssensor 51 ist hierbei dafür eingerichtet, Schwingungsbewegungen des wenigstens einen Messrohrs - nicht zuletzt mit den Nutzschwingungen korrespondierende Schwingungsbewegungen bzw. Bewegungen von Schwingungen des Messrohrs mit Nutzfrequenz $f_N$ - zu erfassen und in ein diese repräsentierendes, als ein Primärsignal des Messwandlers dienendes erstes Schwingungs-Messsignal $s_1$ zu wandeln, beispielsweise mit einer mit einer Geschwindigkeit der erfassten Schwingungsbewegungen korrespondierende Spannung oder einem mit den erfassten Schwingungsbewegungen korrespondierenden Strom. Aufgrund dessen, dass das wenigstens eine Messrohr 10 die erwähnten Nutzschwingungen, mithin Schwingungen mit Nutzfrequenz vollführt, weist das mittels des Schwingungssensor 51 generierte Schwingungs-Messsignal $s_1$ eine der Nutzfrequenz entsprechenden Signalfrequenz auf bzw. enthält das Schwingungs-Messsignal $s_1$ - etwa im Falle einer breitbandigen und/oder multimodalen Schwingungsanregung durch von außen über die angeschlossene Rohrleitung und/oder über das hindurchströmende Medium eingetragene Störungen - zumindest eine entsprechende Nutzsignalkomponente, nämlich eine periodische Signalkomponente mit einer der Nutzfrequenz $f_N$ entsprechenden Signalfrequenz. Der Schwingungssensor 51 kann beispielsweise als ein elektrodynamischer Schwingungssensor ausgebildet, nämlich nach Art einer Tauchspule aufgebaut sein, derart dass der Schwingungssensor 51 eine am Gegenschwinger 20 gehaltene und zugleich an die Mess- und Auswerte-Schaltung, mithin an die damit gebildet Messgerät-Elektronik ME elektrisch angeschlossene zylindrische Sensorspule sowie einen außen am Messrohr 10 fixierten, beispielsweise mit dessen Rohrwand stoffschlüssig verbundenen, dauermagnetischen, mithin ein Magnetfeld führenden Anker aufweist, und dass nämliches Magnetfeld infolge einer durch Schwingungsbewegungen des Messrohrs bedingte Relativbewegung von Anker und Sensorspule in dieser eine als Schwingungs-Messsignal dienliche (Wechsel-) Spannung induziert. Der Schwingungssensor 51 kann aber beispielsweise auch als ein kapazitiver, nämliche mittels eines Kondensators, von dem eine erste Kondensatorplatte am Messrohr und eine zweite Kondensatorplatte am Gegenschwinger fixiert sein können, gebildeter Schwingungssensor ausgestaltet sein.

Nach einer weiteren Ausgestaltung der Erfindung, nicht zuletzt auch für den bereits erwähnten Fall, dass das Dichte-Messgerät zusätzlich auch zur Messung einer Massendurchflussrate bzw. eines Massendurchflusses dienlich ist, ist der Schwingungssensor 51 vom Schwingungserreger 41 entlang des wenigstens Messrohrs beabstandet angeordnet, beispielsweise derart, dass damit einlassseitige Schwingungsbewegungen des Messrohrs, nämlich - wie auch in Fig. 3 schematisch dargestellt - Schwingungsbewegungen des wenigstens einen Messrohrs 10 an einem zwischen dem Messrohrende #11 und dem Schwingungserreger 51 lokalisierten, gleichwohl von sowohl dem Messrohrende #11 als auch dem Schwingungserreger 51 entfernten Messpunkt erfasst werden können.

Das mittels des Schwingungssensors 51 generierte Schwingungs-Messsignal $s_1$ ist, wie auch in Fig. 3 gezeigt, der Messgerät-Elektronik ME und daselbst zunächst einer Eingangsschaltung FE zugeführt, die dazu dient, das Schwingungs-Messsignal $s_1$ zunächst geeignet vorzuverarbeiten, nämlich für eine der eigentlichen Dichtemessung zugrundliegende digitale Signalverarbeitung entsprechend aufzubereiten, beispielsweise nämlich vorzuverstärken, zu filtern und zu digitalisieren. Als Eingangsschaltung FE wie auch als Mess- und Auswerteschaltung $\mu C$ können hierbei auch in herkömmlichen Dichte- bzw. Coriolis-Massedurchfluss-/Dichte-Messgeräten zwecks Konvertierung von mittels eines Messwandlers vom Vibrationstyp gelieferten Primärsignale bzw. zwecks Ermittlung von die Dichte, ggf. auch von die Massendurchflussrate und/oder die Viskosität repräsentierenden Messwerten bis anhin bereits eingesetzte und etablierte Schaltungstechnologien angewendet werden, beispielsweise auch solche gemäß dem eingangs erwähnten Stand der Technik. Nicht zuletzt für den erwähnten Fall, dass die Mess- und Auswerteschaltung $\mu C$, wie u.a. auch in der eingangs erwähnten US-B 63 11 136 gezeigt oder auch vorgenannten Messumformer der Messgeräte-Serie "PROMASS 83F" realisiert, mittels wenigstens eines Mikroprozessors gebildet, mithin zur Verarbeitung von Digitalsignalen vorgesehen ist, ist die Messgerät-Elektronik ferner eingerichtet, das Schwingungssignals $s_1$ mittels eines Analog-zu-digital-Wandlers A/D in ein entsprechendes digitales Schwingungs-Messsignal $s_{1D}$ umzuwandeln und hernach digital weiterzuverarbeiten bzw. auszuwerten.

Wie bereits erwähnt, ist die Messgerät-Elektronik des erfindungsgemäßen Dichte-Messgeräts im Besonderen dafür eingerichtet, unter Verwendung des Schwingungs-Messsignal $s_1$, beispielsweise auch eines daraus gewonnenen digitalen Schwingungs-Messsignal $s_{1D}$, einen die Dichte des im Messwandler geführten Mediums momentan repräsentierenden Dichte-Messwert $X_\rho$ zu generieren bzw. wiederkehrend zu aktualisieren. Die Ermittlung des Dichte-Messwert $X_\rho$ kann hierbei z.B. unter Berücksichtigung einer bekannten - nicht zuletzt auch in konventionellen Dichte-Messgeräten zur Messung der Dichte verwendeten - Relation

$$f_N{}^2 = \frac{B}{\rho - A}\,,$$

<div align="right">(1)</div>

mithin dadurch erfolgen, dass unter Verwendung des wenigstens einen Schwingungs-Messsignals $s_1$ zunächst die momentane Nutzfrequenz $f_N$ ermittelt und hernach nämliche momentane Nutzfrequenz $f_N$ in den die Dichte momentan repräsentierenden Dichte-Messwert $X_\rho$ umgerechnet wird; dies beispielsweise derart, dass nämlicher Dichte-Messwert $X_\rho$ zumindest näherungsweise und/oder zumindest für den Fall, dass das zu messende Medium eine einer Referenz-Temperatur entsprechende Temperatur aufweist, die Bedingung

$$X_\rho = A + \frac{B}{f_N^2}$$

(2)

erfüllt.

Daher ist die Mess- und Auswerteschaltung, mithin die damit gebildete Messgerät-Elektronik ME des erfindungsgemäßen Dichte-Messgerät ferner u.a. auch dafür eingerichtet, im Betrieb einen die Nutzfrequenz $f_N$ repräsentierenden Frequenz-Messwert $X_f$, zu ermitteln bzw. wiederkehrend zu aktualisieren, beispielsweise unter Verwendung des Erregersignals $e_1$ und/oder des wenigstens einen Schwingungs-Messsignals $s_1$, sowie nämlichen Frequenz-Messwert $X_f$ bei der Ermittlung des Dichte-Messwerts $X_\rho$ bzw. der Dichte-Messwerte zu verwenden. Beispielsweise kann der Dichte-Messwert $X_\rho$ bzw. die Dichte-Messwerte mittels der Mess- und Auswerteschaltung basierend auf einer von der vorbezeichneten Bedingung entsprechend abgeleiteten Berechnungsvorschrift:

$$X_\rho = A + \frac{B}{X_f^2}$$

(3)

berechnet werden. Die in nämlicher Berechnungsvorschrift aufgeführten Messgerätspezifischen Koeffizienten A und B können wiederum in der dem Fachmann an und für sich bekannten Weise durch Einmessen des Dichte-Messgeräts mittels verschieden, beispielsweise auch jeweils auf einer der erwähnten Referenz-Temperatur entsprechende Temperatur gehaltenen Medien mit unterschiedlichen Dichten, beispielsweise Luft bzw. Wasser und/oder Glycerin, vorab ermittelt werden, beispielsweise im Zuge einer im Herstellerwerk durchgeführte Nasskalibration.

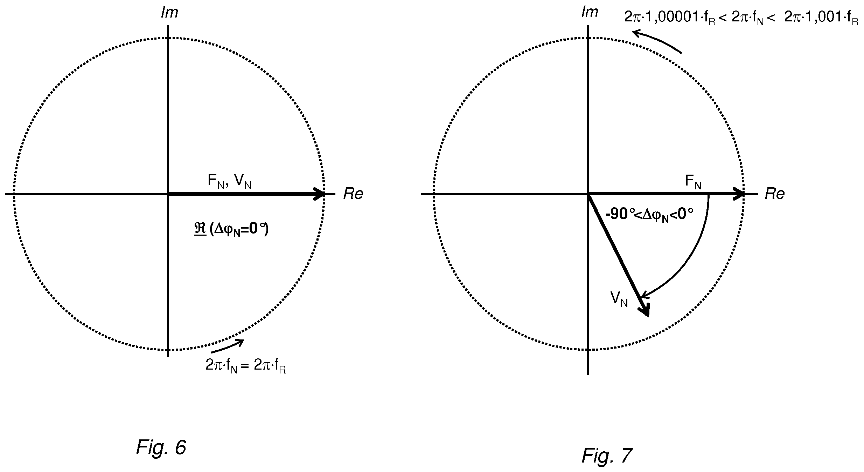

Die für die Ermittlung der Dichte angeregten Nutzschwingungen des wenigstens einen Messrohrs 10 sind, bedingt durch dessen natürliche Schwingungseigenschaften, so ausgebildet, dass - wie in Fig. 6 bzw. 7 mittels eines sogenannten Zeigermodells oder auch Zeigerdiagramms veranschaulicht - eine Geschwindigkeitsantwort $V_N$ des wenigstens einen Messrohrs 10, nämlich eine sich mit der Nutzfrequenz $f_N$ zeitlich ändernde Geschwindigkeit der Schwingungsbewegungen des wenigstens einen Messrohrs 10 am Angriffspunkt, gegenüber der Nutzkraftkomponente $F_N$ der Antriebskraft um einen gewissen Phasenverschiebungswinkel $\varphi_N$ phasenverschoben ist, der von der tatsächlich eingestellten Anregungsfrequenz, mithin von der tatsächlich eingestellten Nutzfrequenz $f_N$ abhängig ist. Aufgrund der dem Messrohr 10 bzw. dem damit gebildeten Innenteil naturgemäß innewohnenden natürlichen Schwingungseigenschaften bzw. des daraus resultierenden dynamischen Übertragungsverhaltens des Messwandlers, ist die vorbezeichnete Abhängigkeit der Geschwindigkeitsantwort $V_N$ von der Nutzkraftkomponente $F_N$ derart, dass für den Fall, dass die eingestellte Anregungsfrequenz - wie bei herkömmlichen Dichte-Messgeräten der in Rede stehenden Art üblich - einer momentanen Resonanzfrequenz des wenigstens einen Messrohrs 10 entspricht, mithin Resonanzbedingung ($\Re$) erfüllt ist, nämlicher Phasenverschiebungswinkel $\varphi_N$ näherungsweise Null ist (Fig. 6), und dass für den Fall, dass die Resonanzbedingung ($\Re$) nicht erfüllt ist, beispielsweise indem die eingestellte Nutzfrequenz $f_N$ mehr als einem 1,00001-fachen, gleichwohl weniger als einem 1,001-fachen einer momentanen Resonanzfrequenz des wenigstens einen Messrohrs 10, im übrigen aber auch keiner anderen Resonanzfrequenz des wenigstens einen Messrohrs entspricht, der Phasenverschiebungswinkel $\varphi_N$ kleiner als 0° ist, beispielsweise nämlich etwa -50° bis -70° beträgt (Fig. 7). Bei einer Verwendung eines aus Edelstahl gefertigten Messrohrs mit einem Kaliber von 29 mm, einer Wandstärke von etwa 1,5 mm, einer Schwinglänge von etwa 420 mm und einer gesehnten Länge, gemessen als kürzester Abstand der beiden Messrohrenden #11, #12, von 305 mm, würde eine dem Biegeschwingungsgrundmode entsprechende Resonanzfrequenz des wenigstens einen Messrohrs, für den Fall, dass dieses lediglich mit Luft gefüllt ist, mithin die Dichte $\rho$ des Mediums praktisch null ist, beispielsweise in etwa 490 Hz betragen. Dementsprechend kann für eine solche Konfiguration des Messwandlers die Anregungs- bzw. die Nutzfrequenz bei einem zwischen -50° bis -70° betragenden Phasenverschiebungswinkel $\varphi_N$ etwa zwischen 490,05 Hz und 490,5 Hz liegen.

Die Antriebskraft F wiederum bzw. deren Nutzkraftkomponente $F_N$ kann in der dem Fachmann an und für sich bekannten Weise, z.B. mittels einer entsprechend konditionierten Stromstärke bzw. Spannungshöhe des elektrischen Erregersignals e1 hinsichtlich ihrer Amplitude bzw. durch Einstellen einer Signalfrequenz nämlichen Erregersignals $e_1$ hinsichtlich ihrer Anregungsfrequenz präzise justiert werden. Dementsprechend ist die Messgerät-Elektronik nach einer weiteren Ausgestaltung der Erfindung dafür eingerichtet, die Antriebskraft F, nicht zuletzt nämlich deren Nutzkraftkomponente $F_N$, durch Ändern einer Signalfrequenz des Erregersignals $e_1$ zu justieren. Beispielsweise kann für den vorbeschriebenen Fall, dass als digitales Steuersignal $e_{1D}$ für die Treiberschaltung ein sinusförmiges Digitalsignal dient, auch nämliches Steuersignal $e_{1D}$ - ggf. unter Berücksichtigung eines tatsächlichen Übertragungsverhaltens der Treiberschaltung Exc und/oder des wenigstens Schwingungserregers 41 - hinsichtlich sowohl der Frequenz als auch der Amplitude mittels der Mess- und Auswerte-Schaltung $\mu$C bereits passend auf die angestrebte Nutzkraftkomponente eingestellt sein.

Charakteristisch für die bei Dichte-Messgeräten der in Rede stehenden Art für die Messung der Dichte $\rho$ jeweils verwendete Nutzfrequenz $f_N$ ist, dass es sich regelmäßig um eine solche Schwingfrequenz handelt, bei der der Phasenverschiebungswinkel $\varphi_N$ zwischen der Geschwindigkeitsantwort $V_N$ und der Nutzkraftkomponente $F_N$ der Antriebskraft F auf einen dafür entsprechend vorgegeben Phasen-Sollwert eingestellt ist, bzw. umgekehrt, die sich ergibt, nachdem der Phasenverschiebungswinkel $\varphi_N$, etwa durch kontinuierliche oder quasi kontinuierliche bzw. schrittweise Verändern der Anregungsfrequenz, mittels der Messgerät-Elektronik zumindest für ein vorgegebenes, nämlich für die eigentliche Messung der Nutzfrequenz benötigtes Phasenregel-Intervall stationär auf den jeweiligen Phasen-Sollwert eingeregelt worden ist.

In herkömmlichen Dichte-Messgeräten dienen, wie bereits erwähnt, typischerweise Resonanzschwingungen, mithin solche Schwingungen als Nutzschwingungen, bei denen der Phasenverschiebungswinkel $\varphi_N$ zumindest näherungsweise 0° beträgt bzw. idealerweise exakt Null ist, bei denen also die vorbezeichnete Resonanzbedingung ($\Re$) erfüllt ist (vgl. Fig. 6). Die tatsächliche Dauer des jeweils benötigten Phasenregel-Intervalls ist nicht zuletzt durch eine Dynamik, nämlich ein zeitliches Verhalten des mittels des Schwingungserregers, des wenigstens einen Messrohrs, des wenigstens einen Schwingungssensor sowie der Messgerät-Elektronik, insb. der Mess- und Auswerteschaltung und der Treiberschaltung, insgesamt gebildeten mechatronischen Systems einerseits, sowie eine Verarbeitungsgeschwindigkeit bzw. Aktualisierungsrate, mit der die Mess- und Auswerteschaltung anhand des Schwingungssignals die Nutzfrequenz ermitteln und die entsprechenden Frequenz-Messwerte generieren kann, bestimmt. Bei Dichte-Messgeräten der in Rede stehenden Art liegen die Aktualisierungsraten für die Frequenz-Messwerte bis anhin typischerweise im Bereich von etwa 100 Hz bis etwa 200 Hz.

Dementsprechend ist die Messgerät-Elektronik ME des erfindungsgemäßen Dichte-Messgeräts ferner dafür eingerichtet, die für die aktive Anregung der Nutzschwingungen erforderliche Antriebskraft mittels des Schwingungs-Messsignals $s_1$ und des Erregersignals $e_1$ zu justieren, derart, dass während eines vorgegebenen - beispielsweise 10 ms oder länger andauerndes - Phasenregel-Intervalls $\Delta t_\varphi$ nämlicher Phasenverschiebungswinkel $\varphi_N$ auf einen dafür vorgegebenen Phasen-Sollwert $\varphi_{N\_SOLL}$ eingestellt ist. Eine tatsächliche erforderlich Dauer des - von der Messgerät-Elektronik im Betrieb selbstreden wiederholt durchlaufenen - Phasenregel-Intervalls $\Delta t_\varphi$ richtet sich zum einen nach einer Geschwindigkeit mit der im Betrieb die Nutzfrequenz einer zeitlich ändernde Dichte passend nachgeführt werden kann und zum anderen u.a. auch danach, wie viele Schwingungsperioden der Nutzschwingungen für einen einzelnen Frequenz-Messwert tatsächlich jeweils erfasst bzw. bzw. wie viele Schwingungsperioden des Schwingungs-Messsignals tatsächlich jeweils ausgewertet werden sollen.

Nach einer weiteren Ausgestaltung der Erfindung ist die Messgerät-Elektronik ferner dafür eingerichtet, den Phasenverschiebungswinkel $\varphi_N$ auf einem dafür vorgegebenen Phasen-Sollwert $\varphi_{N\_SOLL}$ einzuregeln, nämlich auf einen dementsprechenden Phasenwert einzustellen bzw. auf einen dementsprechenden Phasenwert zu halten, derart, dass der Phasenverschiebungswinkel $\varphi_N$ bei konstanter Dichte um weniger als $\pm 1\%$ des nämlichen Phasen-Sollwerts $\varphi_{N\_SOLL}$

und/oder um weniger als $\pm 2°$ um nämlichen Phasen-Sollwert $\varphi_{N\_SOLL}$ schwankt bzw. idealerweise während des gesamten Phasenregel-Intervalls und/oder bei momentan nicht variierender Dichte $\rho$ konstant auf nämlichem Phasen-Sollwert $\varphi_{N\_SOLL}$ gehalten, mithin stationär ist.

Das Einregeln des Phasenverschiebungswinkels $\varphi_N$ auf den Phasen-Sollwert $\varphi_{N\_SOLL}$ kann dadurch erfolgen, dass eine Signalfrequenz des Erregersignals e1 solange zu ändern, bis der Phasenverschiebungswinkel $\varphi_N$ einen dafür vorgegebenen Phasen-Sollwert $\varphi_{N\_SOLL}$ erreicht hat, beispielsweise nämlich derart, dass die Messgerät-Elektronik im Falle eines zu geringen, nämlich kleiner als der Phasen-Sollwert $\varphi_{N\_SOLL}$ eingestellten Phasenverschiebungswinkel $\varphi_N$ nämliche Signalfrequenz verringert, und derart, dass die Messgerät-Elektronik im Falle eines zu großen, nämlich größer als der Phasen-Sollwert $\varphi_{N\_SOLL}$ eingestellten Phasenverschiebungswinkel $\varphi_N$ nämliche Signalfrequenz erhöht. Ein Phasenwert für den momentan tatsächlich eingestellten Phasenverschiebungswinkel $\varphi_N$ wiederum kann mittels der Mess- und Auswerte-Schaltung $\mu C$ beispielsweise basierend auf einem zwischen dem Schwingungs-Messsignal $s_1$ und dem Erregersignal $e_1$ ermittelten, in Messgerät-Elektronike von Dichte-Messgeräten der in Rede stehenden Art im Betrieb regelmäßig ohnehin vorliegenden Phasenwinkel erfolgen.

Der Phasen-Sollwert $\varphi_{N\_SOLL}$ kann falls erforderlich - etwa zwecks Messung noch anderer Messgrößen, wie z.B. einer Viskosität $\eta$, des im wenigstens einen Messrohr 10 geführten Mediums - auch veränderbar sein, derart, dass die Messgerät-Elektronik den für die Messung der Dichte vorgegebenen Phasen-Sollwert $\varphi_{N\_SOLL}$ vorübergehend durch einen anderen, für eine von der Messung der Dichte abweichende zusätzliche Gerätfunktion entsprechend vorgegebenen Phasen-Sollwert ersetzen werden, derart, dass die Messgerät-Elektronik hernach den Phasenverschiebungswinkel $\varphi_N$ auf nämlichen Phasen-Sollwert einregelt.

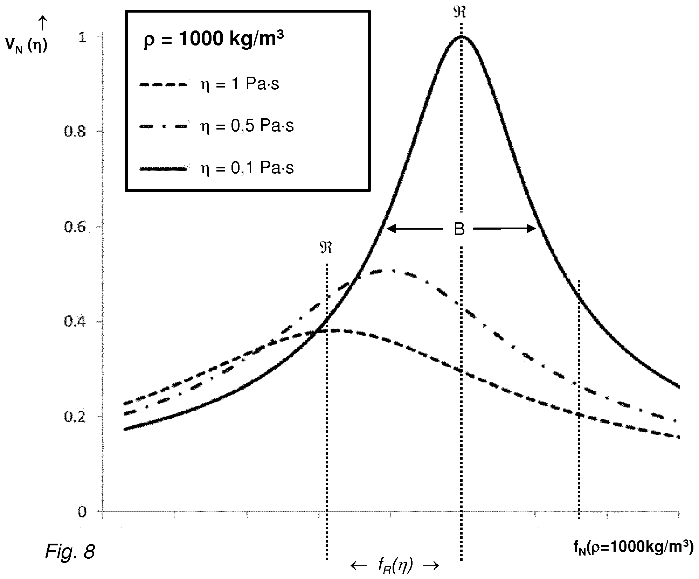

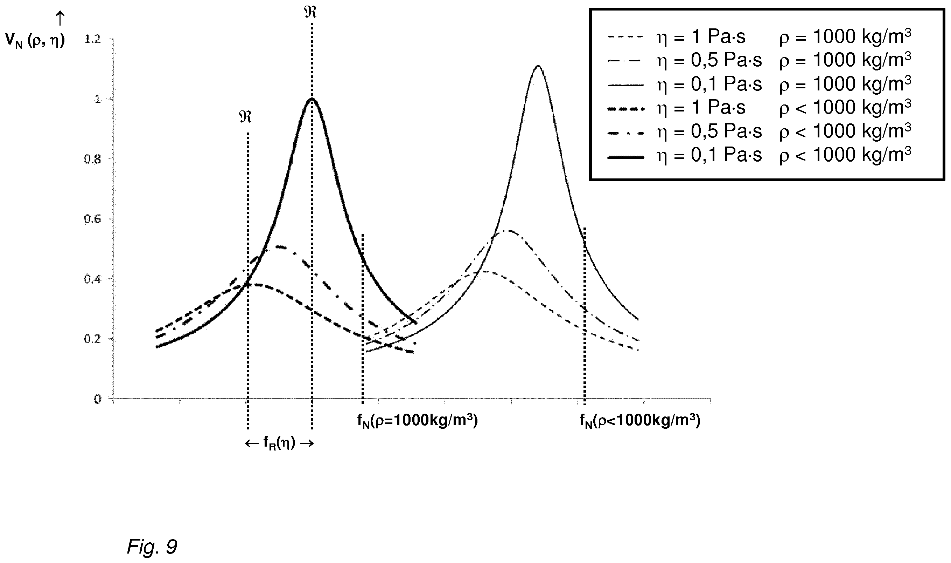

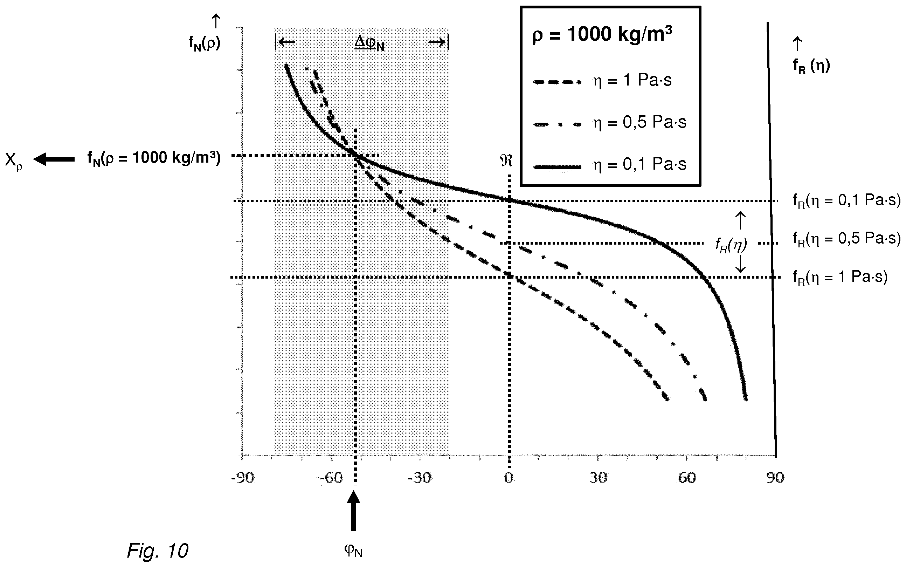

Beim erfindungsgemäßen Dichte-Messgerät sind die Nutzschwingungen - im Unterschied auch zu bis anhin verwendeten herkömmlichen Dichte-Messgeräten - so ausgebildet, dass der Phasenverschiebungswinkel $\varphi_N$ zum Zwecke der Messung der für die Ermittlung der Dichte benötigten Nutzfrequenz $f_N$ mittels der Messgerät-Elektronik kleiner als -30° und größer als -70° eingestellt ist, bzw. umgekehrt, dass die Nutzfrequenz $f_N$ mittels der Messgerät-Elektronik dafür so eingestellt ist, dass nämliche Nutzfrequenz $f_N$ mehr als einem 1,00001-fachen, gleichwohl weniger als einem 1,001-fachen einer Resonanzfrequenz $f_R$ des wenigstens einen Messrohrs, im übrigen aber auch keiner anderen Resonanzfrequenz des wenigstens einen Messrohrs 10 entspricht, mithin die Ermittlung der Dichte auf solchen Nutzschwingungen beruht, bei denen die Resonanzbedingung ($\Re$) nämlich nicht erfüllt ist. Durch Verwendung von einen solchen Phasenverschiebungswinkel $\varphi_N$ bzw. eine solche Nutzfrequenz $f_N$ aufweisenden Nutzschwingungen kann nämlich eine - in Fig. 8 bzw. 9 anhand von die Abhängigkeit der Geschwindigkeitsantwort $V_N$ von der gewählten Anregungsfrequenz illustrierenden Diagrammen (Amplitudenfrequenzgang) bzw. in Fig. 10 anhand eines die Abhängigkeit der Nutzfrequenz $f_N$ vom gewählten Phasenverschiebungswinkels $\varphi_N$ illustrierenden Diagramms (Phasenfrequenzgang) skizzierte - Abhängigkeit der (dem einzustellenden bzw. eingestellten Phasenverschiebungswinkels $\varphi_N$ entsprechenden) Anregungs- bzw. Nutzfrequenz $f_N$ auch von einer momentanen Viskosität $\eta$ des Mediums, resultierend aus einer Abhängigkeit des (entsprechend dem Phasen-Sollwert eingestellten) Phasenverschiebungswinkels $\varphi_N$ von einer den angeregten Nutzschwingungen entgegenwirkenden momentanen Dämpfung, nahezu eliminiert, zumindest aber in erheblichem Maße reduziert werden. Wie aus der Fig. 10 zudem ohne weiteres ersichtlich, ist die Abhängigkeit des Phasenverschiebungswinkel $\varphi_N$ von der momentanen, gleichwohl zeitlich veränderlichen Dämpfung besonders stark im Bereich der in herkömmlichen Dichte-Messgeräten der in Rede stehenden Art zur Messung der Dichte bevorzugt genutzten Resonanzfrequenz $f_R$ ausgeprägt, während nämliche Abhängigkeit zu kleineren, nämlich negativen Phasenverschiebungswinkeln $\varphi_N$ hin, mithin bei im Frequenzbereich geringfügig oberhalb nämlicher Resonanzfrequenz $f_R$ liegenden Anregungs- bzw. Nutzfrequenzen $f_N$ abnimmt bzw. praktisch nicht mehr Messbar ist. Umgekehrt kann, wie aus der Zusammenschau der Fig. 8, 9 und 10 ferner ersichtlich, im Besonderen auch die - nicht zuletzt auch in herkömmlichen Dichte-Messgeräten bis anhin für die Ermittlung der Dichte als Nutzfrequenz (ausschließlich) verwendete - Resonanzfrequenz $f_R$ eine für die für Dichte-Messgeräte der in Rede stehenden Art regelmäßig angestrebte hohe Messgenauigkeit durchaus beachtliche Abhängigkeit auch von der Dämpfung der Nutzschwingungen bzw. der diese verursachenden Viskosität $\eta$ des jeweiligen Mediums aufweisen.

Zur Verringerung der vorbezeichneten Abhängigkeit des Phasenverschiebungswinkels $\varphi_N$ von der den angeregten Nutzschwingungen entgegenwirkenden momentanen Dämpfung ist die Messgerät-Elektronik des erfindungsgemäßen Dichte-Messgeräts dementsprechend ferner dafür eingerichtet, mittels des Schwingungs-Messsignals $s_1$ sowie des Erregersignals $e_1$ die Antriebskraft, insb. nämlich die Nutzkraftkomponente bzw. deren Anregungsfrequenz, so zu justieren, dass der Phasenverschiebungswinkel $\varphi_N$, wie auch in Fig. 10 exemplarisch anhand von für 3 voneinander abweichende Dichten ermittelten Phasenfrequenzgängen des Messwandlers dargestellt, während des Phasenregel-Intervalls $\Delta t_\varphi$ kleiner als -30° und/oder größer als -70°, ist, mithin die Nutzfrequenz während des Phasenregel-Intervalls $\Delta t_\varphi$ einen Frequenzwert aufweist, der mehr als einem 1,00001-fachen, gleichwohl weniger als einem 1,001-fachen eines momentanen Frequenzwerts einer Resonanzfrequenz $f_R$ des wenigstens einen Messrohrs 10 entspricht. Darüber hinaus ist die Messgerät-Elektronik dafür eingerichtet, basierend auf dem während des Phasenregel-Intervalls gewonnenen Schwingungs-Messsignals s1 den wenigstens einen Frequenz-Messwert $X_f$ zu ermitteln, derart, dass nämlicher Frequenz-Messwert $X_f$ die Nutzfrequenz für das Phasenregel-Intervall $\Delta t_\varphi$ repräsentiert, sowie den Dichte-Messwert $X_\rho$ unter Verwendung nämlichen Frequenz-Messwerts $X_f$ zu generieren.

Ein für den jeweiligen Messwandler bzw. das damit gebildete Dichte-Messgerät geeigneter Phasenverschiebungswinkel $\varphi_N$ kann beispielsweise durch computergestützte Simulationsberechnung und/oder experimentell vorab ermittelt werden, beispielsweise indem, wie u.a. auch aus der Fig. 10 ersichtlich, für zwei oder mehr Referenz-Medien mit voneinander abweichender Viskosität, gleichwohl zumindest näherungsweise gleicher Dichte jeweils zugehörige Frequenzgänge ermittelt und anhand nämlicher Frequenzgänge - etwa durch Ermitteln ein einem Schnittpunkt einer Anzahl von Frequenzgänge bzw. einem durch eine Anzahl solcher benachbarter Schnittpunkte gebildeten mittleren Schnittpunkt, ein, im in Fig. 10 gezeigten Diagramm etwa -52° betragender, Phasenwert mit einer minimalen Abhängigkeit von der Viskosität als Phasen-Sollwerts $\varphi_{N\_SOLL}$ festgelegt wird.

Dementsprechend die Messgerät-Elektronik nach einer weiteren Ausgestaltung der Erfindung ferner auch dafür eingerichtet, eine Signalfrequenz des Erregersignals $e_1$ während des gesamten Phasenregel-Intervalls auf einem Frequenzwert zu halten, der nicht weniger als ein 1,0001-faches einer Resonanzfrequenz $f_R$ des wenigstens einen Messrohrs, beispielsweise nämlich einer niedrigsten Resonanzfrequenz und/oder einer einem Biegeschwingungsgrundmode entsprechenden Resonanzfrequenz, und nicht mehr als ein 1,01-faches nämlicher Resonanzfrequenz beträgt. Das Einstellen der Frequenz des Erregersignals, mithin der Nutzfrequenz $f_N$ kann, wie bei Dichte-Messgeräten der in Rede stehenden Art durchaus üblich, unter Verwendung einer in der der Messgerät-Elektronik vorgesehenen, beispielsweise mittels der Mess- und Auswerteschaltung $\mu C$ realisierten, digitalen Phasenreglerschleife (PLL) erfolgen, die den vorbezeichneten Zusammenhang zwischen momentaner Anregungs- bzw. Nutzfrequenz $f_N$ und momentanem Phasenverschiebungswinkel $\varphi_N$ zum Anpassen des Steuersignals $e_{1D}$ an die momentanen Schwingungseigenschaften des mittels des wenigstens einen Messrohrs 10 gebildeten Innenteils ausnutzt. Das Einregeln des Phasenverschiebungswinkels $\varphi_N$ auf den Phasen-Sollwert $\varphi_{N\_SOLL}$ kann beispielsweise dadurch erfolgen, indem die Phasenreglerschleife eine Signalfrequenz des Erregersignals e1 solange ändert, bis durch die Phasenreglerschleife, basierend auf dem erwähnten Schwingungs-Messsignal $s_1$ bzw. unter Verwendung eines daraus gewonnenen digitalen Hilfssignals, wie z.B. dem erwähnten digitalen Schwingungs-Messsignal $s_{1D}$, ein Übereinstimmen von Phasenverschiebungswinkel $\varphi_N$ und vorgegebenem Phasen-Sollwert $\varphi_{N\_SOLL}$ detektiert ist bzw. indem die Phasenreglerschleife nämliche Signalfrequenz des Erregersignals e1 nicht ändert, falls ein Übereinstimmen des Phasenverschiebungswinkels $\varphi_N$ mit dem Phasen-Sollwert $\varphi_{N\_SOLL}$ festgestellt ist.

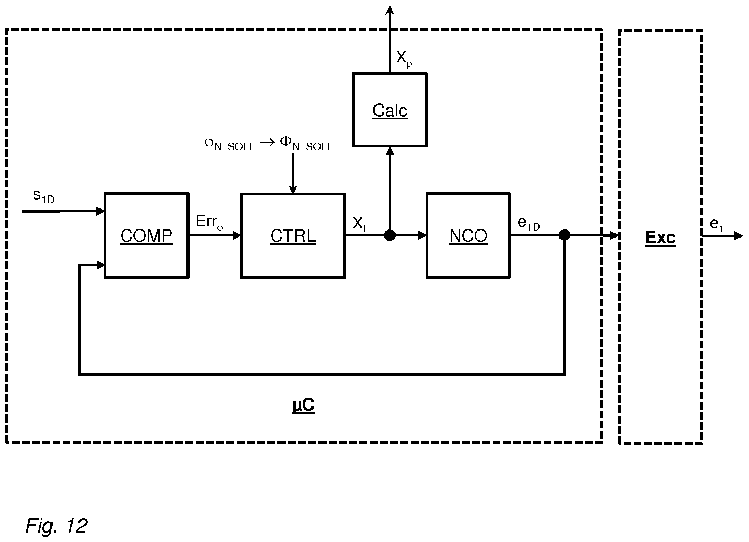

Aufbau und Wirkungsweise solcher Phasenregel-Schleifen, nicht zuletzt aber auch deren Verwendung in vibronischen Dichte-Messgeräten zum aktiven Anregen Nutzschwingungen bzw. zum Justieren einer Nutzfrequenz sind dem Fachmann an und für sich bekannt. Wie in Fig. 12 schematisch kann eine für die Verwendung in einem erfindungsgemäßen Dichte-Messgerät zur Regelung der Anregungsfrequenz, mithin der Nutzfrequenz $f_N$ geeigneten digitale Phasenregleschleife einen Phasenkomparator COMP aufweisen, mittels dem wiederkehrend eine Vergleich einer momentane Phasenlage des an einem ersten Eingang anliegenden digitalen Schwingungs-Messsignals $s_{1D}$ mit einer momentanen Phasenlage des an einen zweiten Eingang zurückzuführte - hier als sinusförmiges Digitalsignal ausgebildeten - Steuersignals $e_{1D}$ durchgeführt wird und mittels dem, basierend auf nämlichem Vergleich, ein Fehlersignal $Err_\varphi$ generiert wird, das signalisiert ob bzw. inwieweit die Phasenlagen der an beiden Eingängen anliegenden Signale - hier nämlich das digitale Schwingungs-Messsignal $s_{1D}$ und das digitale Steuersignal $e_{1D}$ - voneinander abweichen. Das Fehlersignal $Err_\varphi$ ist im weiteren Verlauf einem Frequenzregler CTRL zugeführt, der dazu dient, nämliches Fehlersignal $Err_\varphi$ unter Berücksichtigung eines dem Frequenzregler CTRL vorgegebenen, beispielsweise fest einprogrammierten, Phasenregelungssollwert $\Phi_{N\_SOLL}$ in einen an einem Ausgang des Frequenzregler CTRL abgreifbaren numerischen Steuerwert umzurechnen, der eine Signalfrequenz repräsentiert, mit der das Steuersignals $e_{1D}$ momentan auszugeben ist. Nämlicher Phasenregelungssollwert $\Phi_{N\_SOLL}$ entspricht einem numerischen Phasenwert, der basierend auf dem für den Phasenverschiebungswinkel $\varphi_N$ eigentlich angestrebten Phasen-Sollwert $\varphi_{N\_SOLL}$, vorab ermitteltet ist, und zwar auch unter Berücksichtigung allfälliger weiterer durch das Dichte-Messgerät - beispielsweise nämlich durch den Schwingungserreger, den wenigstens einen Schwingungssensor und/oder die Messgerät-Elektronik, insb. deren Mess- und Auswerteschaltung bzw. deren Treiberschaltung, - bewirkter Einflüsse auf eine Phasenverschiebung zwischen dem Erregersignal $e_1$ und dem wenigsten einen Schwingungs-Messsignals $s_1$. Beispielsweise ist Aufbau und Wirkungsweise des Schwingungserregers bei der Berechnung des Phasenregelungssollwert $\Phi_{N\_SOLL}$ entsprechend zu berücksichtigen, nicht zuletzt auch derart, dass für den erwähnten Fall etwa, dass der Schwingungserreger 41 nach Art einer Schwingspule ausgebildet ist, die Nutzanregungskomponente des Erregersignals $e_1$ einen zumindest näherungsweise mit der Nutzkraftkomponente $F_N$ frequenz- und zumindest näherungsweise phasengleichen periodischen Strom, gleichwohl eine zur Nutzkraftkomponente $F_N$ zwar frequenzgleiche, allerdings um einen Betrag in der Größenordnung von 90° phasenverschobene periodischen Spannung aufweist, oder für den anderen erwähnten Fall, dass der Schwingungserreger vom elektrostatischen Typ, nämlich mittels eines Kondensators gebildet ist, eine elektrische Spannung des Erregersignals $e_1$ eine zumindest näherungsweise mit der Nutzkraftkomponente $F_N$ frequenz- und phasengleiche periodische Spannungskomponente, gleichwohl einen zur Nutzkraftkomponente $F_N$ zwar frequenzgleichen, allerdings um einen Betrag in der Größenordnung von 90° phasenverschobenen periodischen Strom aufweist. Gleichermaßen zu berücksichtigen bei der Berechnung des Phasenregelungssollwert $\Phi_{N\_SOLL}$ ist u.a. auch Aufbau und Wirkungsweise des wenigstens einen Schwingungssensors 51. Für den erwähnten Fall nämlich, dass der wenigstens eine Schwingungssensor 51 nach Art einer Tauchspule ausgebildet ist, weist das Schwingungs-Messsignal $s_1$ eine mit der Geschwindigkeitsantwort $V_N$ des wenigstens einen Messrohrs frequenz- und zumindest näherungsweise phasengleiche periodische Spannung auf, während beispielsweise das Schwingungs-Messsignals $s_1$ für den anderen erwähnten Fall, dass der Schwingungssensor mittels einer Kondensators gebildet ist, einen mit der Geschwindigkeitsantwort des wenigstens einen Messrohrs frequenzgleichen, gleichwohl zur Geschwindigkeitsantwort um etwa +90° phasenverschobenen periodischen Strom aufweist. Weiterhin ist das der Messgerät-Elektronik eigene, nicht zuletzt auch durch das Zusammenwirken der Treiberschaltung und des Schwingungserregers bzw. des Schwingungssensors und der erwähnten Eingangsschaltung FE bestimmte Signalübertragungsverhalten, nicht zuletzt auch ein daraus resultierender Phasenfrequenzgang der Messgerät-Elektronik in die Berechnung des Phasenregelungssollwerts $\Phi_{N\_SOLL}$ entsprechend einzubeziehen bzw. sind der Messgerät-Elektronik, nicht zuletzt der erwähnten Eingangsschaltung, der Mess- und Auswerteschaltung sowie auch der Treiberschaltung, naturgemäß innewohnende Gruppenlaufzeiten einhergehend mit zusätzlichen, nämlich laufzeitbedingten Phasenverschiebungen etwa des erwähnten digitalen Schwingungs-Messsignals $s_{1D}$ relativ zum Schwingungs-Messsignal $s_1$ oder auch des Erregersignals e1 relativ zum erwähnten digitalen Steuersignal $e_{1D}$ entsprechend in den Phasenregelungssollwert $\Phi_{N\_SOLL}$ entsprechend einzurechnen. Der tatsächlich für das Dichte-Messgerät passende Phasenregelungssollwert $\Phi_{N\_SOLL}$ kann beispielsweise im Zuge einer im Herstellerwerk durchgeführten Kalibration nämlichen Dichte-Messgeräts experimentell gemessen und hernach in dem erwähnten nicht-flüchtigen Speicher EEPROM der Messgerät-Elektronik abgespeichert werden.

Der vorbezeichnete, die Signalfrequenz repräsentierender Steuerwert ausgangs des Frequenzreglers CTRL wird ferner einem - hier numerische gesteuerten - Oszillator NCO übergeben, der an einem Ausgang das an die Treiberschaltung geführte digitale Steuersignal $e_{1D}$ mit einer durch den momentanen Steuerwert bestimmten Signalfrequenz liefert. Mittels der so gebildeten Phasenregelschleife kann nämliche Signalfrequenz und im Ergebnis die dementsprechende Nutzfrequenz $f_N$ auf den dem vorgegebenen Phasen-Sollwert $\varphi_{N\_SOLL}$ entsprechenden Frequenzwert gehalten bzw. nach einer Änderung der Resonanzfrequenz $f_R$ infolge einer Änderung der Dichte $\rho$ des im wenigstens einen Messrohr 10 geführten Mediums einem entsprechend geänderten Frequenzwert rasch nachgeführt werden. Wie aus Fig. 8 weiters ersichtlich, kann der Steuerwert am Ausgang des Frequenzregler CTRL beispielsweise bereits auch als Frequenz-Messwert $X_f$ dienen bzw. an ein den Dichte-Messwert $X_\rho$ generierende, beispielsweise nämlich die oben erwähnte Berechnungsvorschrift (3) für die Ermittlung des Dichte-Messwerts $X_\rho$ ausführendes und/oder mittels einer durch einen Mikroprozessor der Messgerät-Elektronik ausgeführte Berechnungsroutine gebildetes, Rechenwerk CALC übergeben werden. Anstelle einer Phasenregelschleife können aber selbstverständlich auch andere für das Einstellen Nutzfrequenz $f_N$ geeignete, dem Fachmann an und für sich bekannte Frequenzregelschaltung verwendet werden, beispielsweise auch solche, die auf einer Mitkopplung des Erregersignals $e_1$ auf das wenigstens eine Schwingungs-Messsignals $s_1$ beruhen.

Zur Korrektur Messprinzip bedingt nahezu unvermeidbarer, regelmäßig aber auch nicht ohne weiteres vernachlässigbarer Abhängigkeiten der Nutzfrequenz von weiteren, nämlich von der Dichte und der Viskosität verschiedenen physikalischen Einflussgrößen, nicht zuletzt auch einer Temperatur des Mediums bzw. einer daraus resultierenden Temperaturverteilung im Messwandler und/oder einer, beispielsweise elastischen bzw. reversiblen, Deformation des wenigstens einen Messrohrs bzw. einer daraus resultierenden Spannungsverteilung im Messwandler, bzw. zur Kompensation allfälliger Querempfindlichkeiten des Messwandlers auf nämliche Einflussgrößen kann das erfindungsgemäße Dichte-Messgerät, falls erforderlich und wie bei Dichte-Messgerät der in Rede stehende Art durchaus üblich, ferner einen mit dem wenigsten einen Messrohr 10 thermisch gekoppelten Temperatursensor, der - wie in Fig. 3 angedeutet - dafür eingerichtet ist, eine Temperatur des wenigstens einen Messrohrs zu erfassen und in ein diese repräsentierendes TemperaturMesssignal θ1 zu wandeln, und/oder einen mit dem wenigsten einen Messrohr mechanisch gekoppelten Dehnungssensor, der - wie in Fig. 3 angedeutet - dafür eingerichtet ist, eine Dehnung des wenigstens einen Messrohrs zu erfassen und in ein diese repräsentierendes DehnungsMesssignal ($\varepsilon$1) zu wandeln, umfassen. Gleichermaßen kann die Messgerät-Elektronik, beispielsweise nämlich auch deren Mess- und Auswerteschaltung, dafür eingerichtet sein, mittels des TemperaturMesssignals θ1 wenigstens einen Temperatur-Messwert $X_\theta$, der eine Temperatur des wenigstens einen Messrohrs repräsentiert, bzw. mittels des DehnungsMesssignals $\varepsilon$1 wenigstens einen Dehnungs-Messwert $X_\varepsilon$ zu ermitteln, der eine Dehnung des wenigstens einen Messrohrs bzw. eine innerhalb des wenigstens einen Messrohrs infolge einer nämliche Dehnung verursachenden Deformation des Messwandlers aufgebaute mechanische Spannung repräsentiert, zu ermitteln, sowie den Dichte-Messwert $X_\rho$ unter Verwendung auch des Temperatur-Messwerts $X_\theta$ bzw. des Dehnungs-Messwerts $X_\varepsilon$ zu generieren.

Unter Ausnutzung der vorbezeichneten Abhängigkeit des Phasenverschiebungswinkel $\varphi_N$ und Nutzfrequenz $f_N$ von Dichte und Viskosität ist zudem auch möglich, mit dem erfindungsgemäßen Dichte-Messgerät zusätzlich zur

Dichte $\rho$ auch die Viskosität $\eta$ des im wenigstens einen Messrohr geführten Mediums zu ermitteln, beispielsweise indem die Messgerät-Elektronik während des Phasenregel-Intervalls basierend auf dem Schwingungs-Messsignal $s_1$ und/oder dem Anregungssignal wenigstens einen die Dämpfungs-Messwert $X_D$ ermittelt, der eine den Nutzschwingungen des wenigstens einen Messrohrs entgegenwirkende Dämpfung repräsentiert, und - wie u.a. auch in der eingangs erwähnten US-B 66 51 513 oder US-B 60 06 609 vorgeschlagen, basierend auf dem Dämpfungs-Messwert $X_D$ einen die Viskosität $\eta$ des Mediums repräsentierenden Viskositäts-Messwert $X_\eta$ generiert. Alternativ oder in Ergänzung kann die Viskosität $\eta$ auch dadurch ermittelt werden, indem vor und/oder nach dem Phasenregel-Intervall, mithin bevor bzw. nachdem die für die Messung der Dichte $\rho$ zunächst benötigte Nutfrequenz $f_N$ eingestellt und basierend darauf zunächst der entsprechende Frequenz-Messwert $X_f$ ermittelt worden ist, mittels der Messgerät-Elektronik das Erregersignal $e_1$, mithin die der Antriebskraft F vorübergehend so eingestellt werden, dass die Nutzkraftkomponente und die Geschwindigkeitsantwort nunmehr, wie bereits erwähnt bzw. auch in Fig. 6 gezeigt, die Resonanzbedingung ($\mathfrak{R}$) erfüllen, mithin die Schwingfrequenz der so aktiv angeregten Schwingungen der momentanen Resonanzfrequenz $f_R$ entsprechen. Daraus abgeleitet kann mittels der Messgerät-Elektronik zunächst ein momentaner Frequenzversatz $\Delta f = f_N - f_R$ ermittelt werden, um den die während des Phasenregel-Intervalls $\Delta t_\varphi$ eingestellte Nutzfrequenz $f_N$ im Vergleich zu einer Referenz-Resonanzfrequenz, nämlich einer Resonanzfrequenz jenes natürlichen Schwingungsmodes, dessen (Eigen-) Schwingungsform den Nutzschwingungen bzw. einer der während des Phasenregel-Intervalls eingestellten Nutzfrequenz $f_N$ jeweils am nahesten benachbarten Resonanzfrequenz entspricht, größer ist, bzw. kann mittels der Messgerät-Elektronik gelegentlich ein nämlichen Frequenzversatz momentan repräsentierender Frequenzdifferenz-Messwert $X_{\Delta f}$ generiert werden. Der Frequenzversatz $\Delta f$ ist mit der Bandbreite B bzw. mit dem Gütefaktor Q des mit seiner momentanen Resonanzfrequenz $f_R$ angeregten Schwingungsmode korreliert, derat, dass der Frequenzversatz $\Delta f$ gleichermaßen wie die Bandbreite ($B^2 \sim \eta$) bzw. der Gütefaktor ($Q^{-2} \sim \eta$) als Maß für die Viskosität dienen, mithin der Viskositäts-Messwert $X_\eta$ unter Verwendung nämlichen Frequenzdifferenz-Messwerts $X_{\Delta f}$ generiert werden kann, beispielsweise basierend auf der Berechnungsvorschrift:

$$X_\eta = C + D \cdot \sqrt{X_{\Delta f}}$$

.

$$(4)$$

Dementsprechend ist die Messgerät-Elektronik nach einer weiteren Ausgestaltung der Erfindung dafür eingerichtet ist, außerhalb des Phasenregel-Intervalls $\Delta t_\varphi$, beispielsweise unmittelbar davor und/oder unmittelbar danach, die Nutzkraftkomponente bzw. deren Anregungsfrequenz zumindest vorübergehend derart zu justieren, dass der Phasenverschiebungswinkel $\Delta_{\varphi N}$ nicht weniger als -5° und nicht mehr als +5° beträgt; dies im Besonderen auch in der Weise, dass der Phasenverschiebungswinkel $\Delta_{\varphi N}$ währenddessen nicht weniger als -2° und/oder nicht mehr als +2° beträgt, dass nämlich die Anregungsfrequenz der Nutzkraftkomponente, wie auch bei konventionellen Dichte-Messgeräten üblich, im Wesentlichen einer momenatnen Resonanzfrequenz des wenigstens einen Messrohrs entspricht, mithin die Nutzschwingungen des wenigstens einen Messrohrs außerhalb des Phasenregel-Intervalls $\Delta t_\varphi$ vorübergehend Resonanzschwingungen sind. Unter Verwendung der - beim erfindungsgemäßen Dichte-Messgerät lediglich als zusätzliche Nutzfrequenz dienlichen - Resonanzfrequenz kann in der vorbeschriebenen Weise u.a. die Viskosität des im wenigstens einen Messrohr geführten Mediums ermittelt werden. Die, beispielsweise während eines Aufstartens des Dichte-Messgeräts und/oder im Betrieb wiederkehrend, aktiv auf Resonanzfrequenz angeregten Nutzschwingungen können ferner auch dazu dienen, die Messgerät-Elektronik gezielt an die mittels des Dichte-Messgeräts im Zusammenspiel mit der angeschlossenen Rohrleitung gebildete Messstelle und/oder an im Betrieb allfällig vorgenommene Mediumswechsel anzupassen, beispielsweise derart, dass der erwähnte Phasenregelungssollwert $\Phi_{N\_SOLL}$ entsprechend feinjustiert wird, und/oder im Zuge eines wiederkehrend durchgeführten Selbsttests die Integrität bzw. Funktionstüchtigkeit des Dichte-Messgeräts zu überprüfen, beispielsweise derart, dass eine mittels der Messgerät-Elektronik diagnostizierte signifikante Abweichung einer oder mehrerer Resonanzfrequenzen von dafür festgelegten Vorgabewerten zum Auslösen einer verminderte Funktionstüchtigkeit und/oder verminderte Messgenauigkeit signalisierenden Warnmeldung führt. Darüber hinaus können die auf Resonanzfrequenz angeregten Nutzschwingungen auch dazu dienen, einen Startwert zu ermitteln, von dem aus das Einregeln des Phasenverschiebungswinkels $\Delta_{\varphi N}$ durch die Messgerät-Elektronik begonnen werden kann bzw. von dem aus nach einer vorübergehend zu hohen Regelabweichung, beispielsweise nach einer abrupten Änderung einer Resonanzfrequenz des Messrohrs um mehr als 1 Hz, etwa infolge eines Mediumswechsels, bzw. bei vorübergehend erheblich schwankender Dichte, etwa infolge von im Medium vorübergehend ausgebildeten Inhomogenitäten, wie in einer Flüssigkeit mitgeführte Gasblasen bzw. Feststoffpartikel, der Phasenverschiebungswinkel $\Delta_{\varphi N}$ schnell wieder an den Phasen-Sollwert $\Delta\varphi_{N\_SOLL}$ herangeführt werden kann.

Für den betriebsmäßig vorgesehenen Fall, dass das zu messende Medium durch das wenigstens eine Messrohr strömt, mithin der Massedurchfluss bzw. die Massendurchflussrate $\dot{m}$ von Null verschieden ist, werden mittels des zugleich in oben beschriebener Weise vibrierenden, nämlich Nutzschwingungen mit einer von der momentanen Resonanzfrequenz abweichenden Nutzfrequenz ausführenden Messrohrs 10 im hindurchströmenden Medium neben den Trägheits- bzw. Reibungskräften zudem auch Corioliskräfte induziert. Diese wiederum wirken auf das Messrohr 10 zurück und bewirken so zusätzliche, sensorisch erfassbare Schwingungen desselben, und zwar im Wesentlichen gemäß einer weiteren natürlichen Schwingungsform mit einer im Vergleich zur Schwingungsform der Nutzschwingungen höheren modalen Ordnung, nämlich mit einer im Vergleich höheren Anzahl an Schwingungsknoten bzw. Schwingungsbäuchen. Eine momentane Ausprägung dieser den angeregten Nutzschwingungen überlagerten und dazu frequenzgleichen sogenannten Coriolis-Schwingungen ist dabei, insb. hinsichtlich ihrer Amplituden, im Besonderen auch von der momentanen Massedurchflussrate abhängig.

Als zum Zweck der Messung der Massendurchflussrate zusätzlich ausgewertete Coriolis-Schwingungen können im Falle eines gekrümmten Messrohrs beispielsweise von diesem dann zusätzlich zu den als Nutzschwingungen dienenden Biegeschwingungen ausgeführte Drehschwingungen um eine senkrecht zur erwähnten Schwingungsachse ausgerichtete, die Mittellinie des wenigstens einen Messrohrs 10 im Bereich der halben Schwingungslänge imaginär schneidende gedachte Drehschwingungsachse dienen.

Zum Messen der Massendurchflussrate $\dot{m}$ bzw. des Massendurchflusses weist der Messwandler nach einer weiteren Ausgestaltung der Erfindung ferner einen, beispielsweise zum ersten Schwingungssensor 51 baugleichen, zweiten Schwingungssensor 52 auf, der dazu dient Schwingungsbewegungen des wenigstens einen Messrohrs zu erfassen und in ein diese repräsentierendes zweites, gleichwohl eine der Nutzfrequenz entsprechende Signalfrequenz aufweisendes Schwingungs-Messsignal s2 zu wandeln. Der Schwingungssensor 52 kann gleichermaßen wie der Schwingungssensor 51 beispielsweise als ein elektrodynamischer Schwingungssensor oder aber beispielsweise auch als ein kapazitiver gebildeter Schwingungssensor ausgestaltet sein. Für den oben beschriebenen Fall, dass das Innenteil mittels eines Messrohrs 10 und eines mit diesem gekoppelten Gegenschwingers 20 gebildet ist, können in vorteilhafter Weise die Schwingungssensoren 51, 52 ferner so ausgebildet und so im Messwandler platziert, dass jeder der Schwingungssensoren überwiegend Schwingungen des Messrohrs 10 relativ zum Gegenschwinger 20, beispielsweise differentiell, erfasst, dass also sowohl das Schwingungs-Messsignal $s_1$ als auch das Schwingungs-Messsignal $s_2$ Schwingungsbewegungen des wenigstens einen Messrohrs 10 relativ zum Gegenschwinger 20 repräsentieren.

Nämlicher Schwingungssensor 52 ist, wie bei in Coriolis-Massendurchfluss-/Dichte-Messgeräten verwendeten Messwandlern üblich, entlang des Messrohrs 10, mithin in Strömungsrichtung gesehen vom Schwingungssensor 51 beabstandet am Messrohr 10 angeordnet ist, beispielsweise derart, dass, wie aus den Fig. 3, 4 oder 5 bzw. deren Zusammenschau ersichtlich, der Schwingungssensor 51 einlassseitig und der Schwingungssensor 52 auslassseitig angeordnet, mithin dafür eingerichtet sind, einlassseitge bzw. auslassseitige Schwingungsbewegungen zu erfassen. Im hier gezeigten Ausführungsbeispiel ist jeder der Schwingungssensoren 51, 52 zudem, wie bei Messwandlern der Rede stehenden Art durchaus üblich, von der Mitte des wenigstens einen Messrohrs 10 bzw. vom - hier nämlich bei halber Schwinglänge platzierten einzigen - Schwingungserreger 41 gleichweit beabstandet.

Infolge der vom Messrohr 10 auch ausgeführten Coriolis-Schwingungen weisen dessen vom Schwingungssensor 51 erfassten einlassseitigen Schwingungsbewegungen und dessen vom Schwingungssensor 52 erfassten auslassseitigen Schwingungsbewegungen jeweils eine voneinander abweichende Phasenlage auf, derart, dass im Ergebnis zwischen dem Schwingungs-Messsignal s1 und dem Schwingungs-Messsignal s2 eine von der Massendurchflussrate $\dot{m}$ des im Lumen des wenigstens einen Messrohrs 10 strömenden Mediums abhängige Laufzeitdifferenz $\Delta t$ bzw. eine dementsprechende Phasendifferenz $\Delta_{\varphi} = 2\pi \cdot f_N \cdot \Delta t$ existiert, mithin Messbar ist. Im Ergebnis dessen kann unter Verwendung sowohl des vom Schwingungssensor 51 während des jeweiligen Phasenregel-Intervalls $\Delta t_{\varphi}$ gelieferten Schwingungssignals s1 als auch des zugleich bzw. während nämlichen Phasenregel-Intervalls vom Schwingungssensor 52 gelieferten Schwingungssignals s2 mittels der Messgerät-Elektronik zusätzlich zur Dichte auch die Massendurchflussrate des während des Phasenregel-Intervalls durch das Messrohr hindurchgeströmten Mediums ermittelt werden. Nach einer weiteren Ausgestaltung der Erfindung ist die Messgerät-Elektronik daher ferner auch dafür eingerichtet ist, während des Phasenregel-Intervalls $\Delta t_\varphi$ basierend auf sowohl dem ersten Schwingungs-Messsignal s1 als auch dem zweiten Schwingungs-Messsignal s2 zusätzlich einen Phasendifferenz-Messwert $X_{\Delta\varphi}$ zu ermitteln, der die von der Massendurchflussrate m abhängige Phasendifferenz $\Delta\varphi_m$ für das Phasenregel-Intervall $\Delta t_\varphi$ repräsentiert; dies im Besonderen, um hernach basierend auf nämlichem Phasendifferenz-Messwert $X_{\Delta\varphi}$ einen die Massendurchflussrate bzw. den Massendurchfluss repräsentierenden Massendurchfluss-Messwert $X_m$ zu generieren. Alternativ oder in Ergänzung ist die Messgerät-Elektronik ferner dafür eingerichtet, die Nutzkraftkomponente $F_N$ bzw. den Phasenverschiebungswinkel auch mittels des zweiten Schwingungs-Messsignals s2, insb. nämlich basierend auf sowohl dem Schwingungs-Messsignal s1 als auch dem Schwingungs-Messsignal s2, zu justieren, beispielsweise derart, dass mittels des Schwingungs-Messsignals s1 sowie des Schwingungs-Messsignals s2 zunächst ein die Schwingungsbewegungen des Messrohrs 10 am Ort des Schwingungserregers bzw. dem damit gebildeten Angriffspunkt repräsentierendes bzw. dazu zumindest phasengleiches, insb. digitales, Sensorsummensignal gebildet und hernach nämliches Summensignal als digitales Schwingungs-Messsignal $s_{1D}$ dem ersten Eingang des Phasenkomparators COMP der erwähnten Phasenregelschleife (PLL) zugeführt, mithin zur Steuerung nämlicher Phasenregelschleife verwendet wird. Darüber hinaus kann zudem auch der Frequenz-Messwert $X_f$ unter Verwendung des Schwingungssignals s2, beispielsweise auch basierend auf sowohl dem Schwingungs-Messsignal s1 als auch dem Schwingungs-Messsignal s2 ermittelt werden.

Es sei an dieser Stelle ergänzend noch darauf hingewiesen, dass - obwohl der Messwandler im in den Fig. 4 und 5 stellvertretend gezeigten Ausführungsbeispiel lediglich ein einziges gekrümmtes Messrohr aufweist und zumindest insoweit in seinem mechanischen Aufbau wie auch seinem Wirkprinzip dem in den eingangs erwähnten US-B 73 60 451 bzw. US-B 66 66 098 vorgeschlagenen bzw. auch den seitens der Anmelderin unter der Typbezeichnung *"PROMASS H", "PROMASS P" oder "PROMASS S"* auch käuflich angebotenen Messwandlern ähnelt - zur Realisierung der Erfindung selbstverständlich auch andere Messwandler der in Rede stehenden Art dienen können, nicht zuletzt auch solche mit geradem und/oder mehr als einem Messrohr, etwa vergleichbar den in den eingangs erwähnten US-A 60 06 609, US-B 65 13 393, US-B 70 17 424, US-B 68 40 109, US-B 69 20 798, US-A 57 96 011 bzw. US-B 75 49 319 gezeigten oder beispielsweise auch den seitens der Anmelderin unter der Typbezeichnung *"PROMASS I", "PROMASS E", "PROMASS F" oder "PROMASS X"* (http://www.de.endress.com/#products/coriolis) käuflich angebotenen Messwandlern. Demnach kann der Messwandler auch ein einziges gerades Messrohr oder wenigstens zwei, beispielsweise mittels eines einlassseitigen Strömungsteilers und eines auslassseitigen Strömungsteilers, ggf. zusätzlich auch noch mittels wenigstens eines einlassseitigen Koppelelements und wenigstens eines auslassseitigen Koppelelements, miteinander mechanisch gekoppelte und/oder einander baugleiche und/oder gekrümmte und/oder zueinander parallele, Messrohre zum Führen von zu messendem Medium aufweisen, die im Betrieb zum Erzeugen der Primärsignale zumindest zeitweise vibrieren, etwa frequenzgleich auf einer gemeinsamen Schwingfrequenz, jedoch zueinander gegenphasig, oder kann der Messwandler beispielsweise auch mittels vier gerader oder mittels vier gekrümmten Messrohren gebildet sein.


**Patentansprüche**

1. Dichte-Messgerät zum Messen der Dichte, p, eines strömungsfähigen Mediums, umfassend:

   eine Messgerät-Elektronik (ME) sowie
   einen mit der Messgerät-Elektronik (ME) elektrisch verbundenen Messwandler (MW)
   mit wenigstens einem Messrohr (10),
   mit einem Schwingungserreger (41) zum Anregen und Aufrechterhalten von Nutzschwingungen, des wenigstens einen Messrohrs, und
   mit einem ersten Schwingungssensor (51) zum Erfassen von Schwingungen des wenigstens einen Messrohrs;
   wobei das wenigstens eine Messrohr (10) ein von einer Rohrwand umgebenes Lumen aufweist und dafür eingerichtet ist, in seinem Lumen Medium zu führen und währenddessen vibrieren gelassen zu werden, derart, dass das wenigstens eine Messrohr Nutzschwingungen, nämlich mechanische Biegeschwingungen, um eine Ruhelage mit einer von der Dichte des Mediums mitbestimmten, Nutzfrequenz, $f_N$, ausführt;
   wobei der erste Schwingungssensor (51) dafür eingerichtet ist, Schwingungsbewegungen des wenigstens einen Messrohrs zu erfassen und in ein diese repräsentierendes erstes Schwingungs-Messsignal ($s_1$) zu wandeln;
   wobei die Messgerät-Elektronik dafür eingerichtet ist, mittels eines Erregersignals ($e_1$) elektrische Leistung in den Schwingungserreger (41) einzuspeisen;
   und wobei der Schwingungserreger (41) dafür eingerichtet ist, mittels des Erregersignals ($e_1$) eingespeiste elektrische Leistung in eine an einem mittels des Schwingungserregers gebildeten Angriffspunkt auf das wenigstens eine Messrohr wirkende Antriebskraft, F, zu wandeln, die eine in das wenigstens eine Messrohr eingeleitete Nutzkraftkomponente, $F_N$, nämlich eine sich mit einer der Nutzfrequenz entsprechenden Anregungsfrequenz ändernde, die Nutzschwingungen bewirkende periodische Kraftkomponente, aufweist;
**dadurch gekennzeichnet,**
**dass** die Messgerät-Elektronik dafür eingerichtet ist, mittels des ersten Schwingungs-Messsignals $(s_1)$ sowie des Erregersignals $(e_1)$ die Antriebskraft, insb. nämlich die Nutzkraftkomponente bzw. deren Anregungsfrequenz, zu justieren, derart, dass während eines vorgegebenen Phasenregel-Intervalls ein, konstant gehaltener, Phasenverschiebungswinkel, $\varphi_N$, um den eine Geschwindigkeitsantwort, $V_N$, des wenigstens einen Messrohrs, nämlich eine sich mit der Nutzfrequenz zeitlich ändernde Geschwindigkeit der Schwingungsbewegungen des Messrohrs am Angriffspunkt, gegenüber der Nutzkraftkomponente, $F_N$, der Antriebskraft phasenverschoben ist, kleiner als -30° und größer als -70° ist, wobei bei dem Phasenverschiebungswinkel $\varphi_N$ eine Abhängigkeit der Nutzfrequenz von der Viskosität des Mediums geringer ist als unter Resonanzbedingung;
und **dass** die Messgerät-Elektronik dafür eingerichtet ist,
sowohl basierend auf dem während des Phasenregel-Intervalls vorliegenden ersten Schwingungs-Messsignal (s1) wenigstens einen Frequenz-Messwert, $X_f$, zu ermitteln, der die Nutzfrequenz für nämliches Phasenregel-Intervall repräsentiert,
als auch unter Verwendung nämlichen Frequenz-Messwerts, $X_f$, einen die Dichte, p, repräsentierenden Dichte-Messwert, $X_\rho$, zu generieren.

2. Dichte-Messgerät nach Anspruch 1, wobei das Phasenregel-Intervall nicht weniger als 10 ms beträgt.

3. Dichte-Messgerät nach einem der vorherigen Ansprüche,
wobei die Messgerät-Elektronik dafür eingerichtet ist, eine Signalfrequenz des Erregersignals (e1) solange zu ändern, bis der Phasenverschiebungswinkel, $\varphi_N$, einen dafür vorgegebenen Phasen-Sollwert, $\varphi_{N\_SOLL}$, erreicht hat, insb. nämlich derart, dass die Messgerät-Elektronik im Falle eines zu geringen, nämlich kleiner als der Phasen-Sollwert, $\varphi_{N\_SOLL}$, eingestellten Phasenverschiebungswinkel, $\varphi_N$, nämliche Signalfrequenz verringert, und derart, dass die Messgerät-Elektronik im Falle eines zu großen, nämlich größer als der Phasen-Sollwert, $\varphi_{N\_SOLL}$, eingestellten Phasenverschiebungswinkel, $\varphi_N$, nämliche Signalfrequenz erhöht.

4. Dichte-Messgerät nach einem der vorherigen Ansprüche,
wobei die Messgerät-Elektronik dafür eingerichtet ist, den Phasenverschiebungswinkel, $\varphi_N$, während des gesamten Phasenregel-Intervalls und/oder für eine Zeitdauer von mehr als 10 ms auf einen dafür vorgegebenen Phasen-Sollwert, $\varphi_{N\_SOLL}$, einzuregeln; insb. derart, dass der Phasenverschiebungswinkel, $\varphi_N$, bei konstanter Dichte um weniger als $\pm 1\%$ des nämlichen Phasen-Sollwerts, $\varphi_{N\_SOLL}$, und/oder um weniger als $\pm 2°$ um nämlichen Phasen-Sollwert, $\varphi_{N\_SOLL}$, schwankt.

5. Dichte-Messgerät nach einem der vorherigen Ansprüche,
wobei der Messwandler einen entlang des wenigstens einen Messrohrs vom ersten Schwingungssensor beabstandeten, zum ersten Schwingungssensor baugleichen, zweiten Schwingungssensor (52) zum Erfassen von Schwingungen des wenigstens einen Messrohrs (10) aufweist, und
wobei der zweite Schwingungssensor (52) dafür eingerichtet ist, Schwingungsbewegungen des wenigstens einen Messrohrs (10) zu erfassen und in ein diese repräsentierendes, insb. eine der Nutzfrequenz entsprechende Signalfrequenz aufweisendes, zweites Schwingungs-Messsignal $(s_2)$ zu wandeln.

6. Dichte-Messgerät nach Anspruch 5,
wobei die Messgerät-Elektronik dafür eingerichtet ist, den Frequenz-Messwert, $X_f$, basierend auf sowohl dem ersten Schwingungs-Messsignal (s1) als auch dem zweiten Schwingungs-Messsignal (s2) zu ermitteln; und/oder
wobei die Messgerät-Elektronik dafür eingerichtet ist, die Nutzkraftkomponente auch mittels des zweiten Schwingungs-Messsignals (s2) zu justieren.

7. Dichte-Messgerät nach einem der vorherigen Ansprüche,
wobei die Messgerät-Elektronik dafür eingerichtet ist, außerhalb des Phasenregel-Intervalls die Nutzkraftkomponente, insb. deren Anregungsfrequenz, zumindest vorübergehend, insb. während eines Aufstartens des Dichte-Messgeräts und/oder für eine Überprüfung von dessen Funktionstüchtigkeit, derart zu justieren, dass die Nutzschwingungen des wenigstens einen Messrohrs zeitweise Resonanzschwingungen sind, mithin die Nutzfrequenz zeitweise einer Resonanzfrequenz des wenigstens einen Messrohrs entspricht.

8. Dichte-Messgerät nach einem der vorherigen Ansprüche,
wobei das wenigstens eine, insb. eine aus Silizium oder Titan bestehende Rohrwand aufweisende, Messrohr ein Kaliber aufweist, das kleiner als 1 mm, insb. kleiner als 0,5 mm, ist.

**9.** Dichte-Messgerät nach einem der vorherigen Ansprüche, weiters umfassend:

einen mit dem wenigsten einen Messrohr thermisch gekoppelten Temperatursensor, der dafür eingerichtet ist, eine Temperatur des Messrohrs zu erfassen und in ein diese repräsentierendes Temperatur-Messsignal ($\theta$1) zu wandeln,
wobei die Messgerät-Elektronik dafür eingerichtet ist, mittels des TemperaturMesssignals ($\theta$1) wenigstens einen Temperatur-Messwert, $X_\theta$, zu ermitteln, der eine Temperatur des Messrohrs repräsentiert, und
wobei die Messgerät-Elektronik dafür eingerichtet ist, den Dichte-Messwert, $X_\rho$, unter Verwendung auch des Temperatur-Messwerts, $X_\theta$, zu generieren.

**10.** Dichte-Messgerät nach einem der vorherigen Ansprüche, weiters umfassend:

einen mit dem wenigstens einen Messrohr mechanisch gekoppelten Dehnungssensor, der dafür eingerichtet ist, eine Dehnung des wenigstens einen Messrohrs zu erfassen und in ein diese repräsentierendes Dehnungs-Messsignal ($\varepsilon$1) zu wandeln,
wobei die Messgerät-Elektronik dafür eingerichtet ist, mittels des Dehnungs-Messsignals ($\varepsilon$1) wenigstens einen Dehnungs-Messwert, $X_\varepsilon$, zu ermitteln, der eine Dehnung des Messrohrs bzw. eine innerhalb des wenigstens einen Messrohrs, aufgebaute mechanische Spannung repräsentiert, und
wobei die Messgerät-Elektronik dafür eingerichtet ist, den Dichte Messwert, $X_\rho$, unter Verwendung auch des Dehnungs-Messwert, $X_\varepsilon$, zu generieren.

**11.** Dichte-Messgerät, nach einem der vorherigen Ansprüche, wobei die Messgerät-Elektronik dafür eingerichtet ist, basierend auf dem ersten Schwingungs-Messsignal (s1) und dem Erregersignal (e1) einen Viskositäts-Messwert, $X_\eta$, zu generieren, der eine Viskosität, $\eta$, des Mediums repräsentiert.

**12.** Dichte-Messgerät nach einem der Ansprüche 5 oder 6 oder von Anspruch 5 oder 6 abhängigen Anspruch, wobei das wenigstens eine Messrohr (10) dafür eingerichtet ist, während des Ausführens der Nutzschwingungen vom Medium mit einer Massendurchflussrate, $\dot{m}$, durchströmt zu werden, um im strömenden Medium von dessen Massendurchflussrate, $\dot{m}$, abhängige Corioliskräfte zu induzieren, die geeignet sind, den Nutzschwingungen überlagerte, dazu frequenzgleiche Coriolis-Schwingungen zu bewirken, derart, dass zwischen dem ersten Schwingungs-Messsignal (s1) und dem zweiten Schwingungs-Messsignal (s2) eine von der Massendurchflussrate, $\dot{m}$, abhängige Phasendifferenz, $\Delta\varphi_m$, existiert.

**13.** Dichte-Messgerät nach Anspruch 12,
wobei die Messgerät-Elektronik dafür eingerichtet ist, basierend auf sowohl dem ersten Schwingungs-Messsignal (s1) als auch dem zweiten Schwingungs-Messsignal (s2) einen die Massendurchflussrate, $\dot{m}$, repräsentierenden Massendurchfluss-Messwerts, $X_m$, zu generieren, insb. derart, dass die Messgerät-Elektronik basierend auf dem ersten Schwingungs-Messsignal und dem zweiten Schwingungs-Messsignal (s2) einen Phasendifferenz-Messwert, $X_{\Delta\varphi}$, ermittelt, der die von der Massendurchflussrate, $\dot{m}$, abhängige Phasendifferenz, $\Delta\varphi_m$, repräsentiert, und dass die Messgerät-Elektronik den Massendurchfluss-Messwert, $X_m$, basierend auf nämlichem Phasendifferenz-Messwert, $X_{\Delta\varphi}$, generiert.

**14.** Dichte-Messgerät nach Anspruch 12 oder 13,
wobei die Messgerät-Elektronik dafür eingerichtet ist, während des Phasenregel-Intervalls basierend auf sowohl dem ersten Schwingungs-Messsignal (s1) als auch dem zweiten Schwingungs-Messsignal (s2) einen Phasendifferenz-Messwert, $X_{\Delta\varphi}$, zu ermitteln, der die von der Massendurchflussrate, $\dot{m}$, abhängige Phasendifferenz, $\Delta\varphi_m$, für nämliches Phasenregel-Intervall repräsentiert.

**Claims**

**1.** Density meter designed to measure the density, p, of a medium capable of flowing, comprising:

a measuring device electronics unit (ME) and
a transducer (MW) electrically connected to the measuring device electronics unit (ME)
with at least a measuring tube (10),
with a vibration exciter (41) designed to excite and maintain useful vibrations of the at least one measuring tube, and

with a first vibration sensor (51) designed to detect vibrations of the at least one measuring tube;

wherein the at least one measuring tube (10) has an interior channel surrounded by a tube wall and wherein said measuring tube is designed to conduct medium in the interior channel and to be made to vibrate during this time in such a way that the at least one measuring tube performs the useful vibrations, particularly mechanical flexural vibrations, around a rest position with a useful frequency, $f_N$, which is co-determined by the density of the medium;

wherein the first vibration sensor (51) is designed to detect vibration movements of the at least one measuring tube and to convert them to a first vibration measuring signal ($s_1$) representing said movements;

wherein the measuring device electronics unit is designed to feed electrical energy into the vibration exciter (41) by means of an exciter signal ($e_1$);

and wherein the vibration exciter (41) is designed to convert electrical energy supplied by means of the exciter signal ($e_1$) to a drive force, F, which acts on the at least one measuring tube at an application point formed by means of the vibration exciter and which has a useful force component, $F_N$, introduced into the at least one measuring tube, specifically a periodic force component which varies with a excitation frequency corresponding to the useful frequency and which causes useful vibrations;

**characterized in that**

the measuring device electronics unit is designed to adjust the drive force, particularly the useful force component and its excitation frequency, by means of the first vibration measuring signal ($s_1$) and the exciter signal ($e_1$), in such a way that, during a predefined phase rule interval, a constant phase shift angle, $\varphi_N$ - by which a velocity response, $V_N$, of the at least one measuring tube, specifically a velocity of the vibration movements of the measuring tube at the application point which varies over time with the useful frequency, is phase-shifted in relation to the useful force component, $F_N$, of the drive force - is less than -30° and greater than -70°, wherein in the case of the phase shift angle $\varphi_N$ a dependence of the useful frequency on the viscosity of the medium is less than at the resonance condition;

and **in that** the measuring device electronics unit is designed

to determine, on the basis of the first vibration measuring signal ($s_1$) present during the phase rule interval, at least a frequency measured value, $X_f$, which represents the useful frequency for said phase rule interval,

and to generate a density measured value, $X_\rho$, which represents the density, p, of the medium using said frequency measured value, $X_f$.

2. Density meter as claimed in Claim 1, wherein the phase rule interval is not less than 10 ms.

3. Density meter as claimed in one of the previous claims,
wherein the measuring device electronics unit is designed to modify a signal frequency of the exciter signal ($e_1$) until the phase shift angle, $\varphi_N$, has reached a phase set value, $\varphi_{N\_SOLL}$, predefined for this purpose, particularly in such a way that the measuring device electronics unit reduces said signal frequency in the event of a phase shift angle, $\varphi_N$, which is too low, particularly lower than the phase set value, $\varphi_{N\_SOLL}$, and in such a way that the measuring device electronics unit increases said signal frequency in the event of a phase shift angle, $\varphi_N$, which is too large, particularly greater than the phase set value, $\varphi_{N\_SOLL}$.

4. Density meter as claimed in one of the previous claims,
wherein the measuring device electronics unit is designed to regulate the phase shift angle, $\varphi_N$, during the entire phase rule interval and/or during a period of more than 10 ms to a phase set value, $\varphi_{N\_SOLL}$, predefined for this purpose; particularly in such a way that the phase shift angle, $\varphi_N$, varies, at a constant density, by less than $\pm 1$ % of said phase set value, $\varphi_{N\_SOLL}$, and/or by less than $\pm 2$ % of said phase set value, $\varphi_{N\_SOLL}$.

5. Density meter as claimed in one of the previous claims,
wherein the transducer has a second vibration sensor (52), which is spaced at a distance from the first vibration sensor along the at least one measuring tube and which is identical in design to the first vibration sensor, wherein said second vibration sensor (52) is designed to detect vibrations of the at least one measuring tube (10), and wherein the second vibration sensor (52) is designed to detect vibration movements of the at least one measuring tube (10) and to convert them to a second vibration measuring signal ($s_2$) representing the movements, particularly with a signal frequency corresponding to the useful frequency.

6. Density meter as claimed in Claim 5,
wherein the measuring device electronics unit is designed to determine the frequency measured value, $X_f$, based on both the first vibration measuring signal (s1) and the second vibration measuring signal ($s_2$); and/or
wherein the measuring device electronics unit is designed to adjust the useful force component also by means of the second vibration measuring signal ($s_2$).

7. Density meter as claimed in one of the previous claims,
wherein the measuring device electronics unit is designed to at least temporarily adjust the useful force component, particularly its excitation frequency, outside the phase rule interval, particularly during the start-up of the density meter and/or for a check of its operability, in such a way that the useful vibrations of the at least one measuring tube are temporarily resonance vibrations, and therefore the useful frequency corresponds temporarily to a resonance frequency of the at least one measuring tube.

8. Density meter as claimed in one of the previous claims, wherein the at least one measuring tube, comprising particularly a tube wall made of silicon or titanium, has a caliber less than 1 mm, particularly less than 0.5 mm.

9. Density meter as claimed in one of the previous claims, further comprising:

   a temperature sensor which is thermally coupled to the at least one measuring tube and is designed to detect a temperature of the measuring tube and to convert it into a temperature measuring signal ($\theta1$) that represents the temperature,
   wherein the measuring device electronics unit is designed to determine at least a temperature measured value, $X_\theta$, by means of the temperature measuring signal ($\theta1$), said temperature measured value representing a temperature of the measuring tube, and
   wherein the measuring device electronics unit is designed to generate the density measured value, $X_\rho$, also using the temperature measured value, $X_\theta$.

10. Density meter as claimed in one of the previous claims, further comprising:

   an extensometer that is mechanically coupled to the at least one measuring tube, wherein said extensometer is designed to detect an elongation of the at least one measuring tube and to convert it to an elongation measuring signal ($\varepsilon1$) that represents said elongation,
   wherein the measuring device electronics unit is designed to determine, by means of the elongation measuring signal ($\varepsilon1$), at least an elongation measured value, $X_\varepsilon$, which represents an elongation of the measuring tube or a mechanical strain built up inside the at least one measuring tube, and
   wherein the measuring device electronics unit is designed to generate the density measured value, $X_\rho$, also using the elongation measured value, $X_\varepsilon$.

11. Density meter as claimed in one of the previous claims, wherein the measuring device electronics unit is designed to generate a viscosity measured value, $X_\eta$, which represents a viscosity, $\eta$, of the medium on the basis of the first vibration measuring signal ($s_1$) and the exciter signal ($e_1$).

12. Density meter as claimed in one of the Claims 5 or 6 or a claim that depends on Claim 5 or 6, wherein the at least one measuring tube (10) is designed to have medium flow through it with a mass flow rate, $\dot{m}$, during the execution of useful vibrations in order to induce Coriolis forces in the flowing medium which depend on the mass flow, $\dot{m}$, said Coriolis forces being suitable to cause Coriolis vibrations that are superimposed on the useful vibrations and have the same frequency, in such a way that a phase difference, $\Delta_{\varphi m}$, which depends on the mass flow rate, $\dot{m}$, exists between the first vibration measuring signal ($s_1$) and the second vibration measuring signal ($s_2$).

13. Density meter as claimed in Claim 12,
wherein the measuring device electronics unit is designed to generate a mass flow measured value, $X_m$, which represents the mass flow, $\dot{m}$, on the basis of both the first vibration measuring signal ($s_1$) and the second vibration measuring signal ($s_2$), particularly in such a way that the measuring device electronics unit determines a phase difference measured value, $X_{\Delta\varphi}$, on the basis of the first vibration measuring signal ($s_1$) and the second vibration measuring signal ($s_2$), wherein said measured value represents the phase difference, $\Delta_{\varphi m}$, which depends on the mass flow, $\dot{m}$, and in such a way that the measuring device electronics unit generates the mass flow measured value, $X_m$, on the basis of the phase difference measured value, $X_{\Delta\varphi}$.

14. Density meter as claimed in Claim 12 or 13,
wherein the measuring device electronics unit is designed to determine a phase difference measured value, $X_{\Delta\varphi}$,

during the phase rule interval on the basis of both the first vibration measuring signal ($s_1$) and the second vibration measuring signal ($s_2$), wherein said measured value represents the phase difference, $\Delta_{\varphi m}$, which depends on the mass flow, $\dot{m}$, for said phase rule interval.

**Revendications**

**1.** Densimètre destiné à la mesure de la densité, p, d'un produit apte à s'écouler, comprenant :

une électronique d'appareil de mesure (ME) ainsi que
un transducteur (MW) relié électriquement avec l'électronique d'appareil de mesure (ME)
avec au moins un tube de mesure (10),
avec un excitateur de vibrations (41) destiné à exciter et à maintenir les vibrations utiles de l'au moins un tube de mesure, et
avec un premier capteur de vibrations (51) destiné à détecter les vibrations de l'au moins un tube de mesure ;
l'au moins un tube de mesure (10) présentant un canal intérieur entouré par une paroi de tube et lequel tube de mesure étant conçu pour guider le produit dans son canal intérieur et pour être mis en vibrations pendant ce temps, de telle sorte que l'au moins un tube de mesure exécute des vibrations utiles, notamment des vibrations de flexion mécaniques, autour d'une position de repos avec une fréquence utile, $f_N$, qui est codéterminée par la densité du produit ;
le premier capteur de vibrations (51) étant conçu pour détecter les mouvements vibratoires de l'au moins un tube de mesure et pour les convertir en un premier signal de mesure de vibrations ($s_1$) représentant ces mouvements ;
l'électronique d'appareil de mesure étant conçue pour injecter de l'énergie électrique dans l'excitateur de vibrations (41) au moyen d'un signal d'excitation ($e_1$) ;
et l'excitateur de vibrations (41) étant conçu pour convertir l'énergie électrique injectée au moyen du signal d'excitation ($e_1$) en une force motrice, F, qui agit sur l'au moins un tube de mesure en un point d'application formé au moyen de l'excitateur de vibrations et qui présente une composante de force utile, $F_N$, appliquée dans l'au moins un tube de mesure, à savoir une composante de force périodique qui varie avec une fréquence d'excitation correspondant à la fréquence utile et qui provoque les vibrations utiles ;
**caractérisé**
**en ce que** l'électronique d'appareil de mesure est conçue pour ajuster la force d'entraînement, notamment la composante de force utile et sa fréquence d'excitation, au moyen du premier signal de mesure de vibration ($s_1$) et du signal d'excitation ($e_1$), de telle sorte que, pendant un intervalle de réglage de phase prédéfini, un angle de déphasage, $\varphi_N$, - maintenu constant, par lequel une réponse de vitesse, $V_N$, de l'au moins un tube de mesure, à savoir une vitesse des mouvements vibratoires du tube de mesure au point d'application, qui varie dans le temps avec la fréquence utile, est déphasée par rapport à la composante de force utile, $F_N$, de la force d'entraînement - est inférieur à -30° et supérieur à -70°, une dépendance de la fréquence utile par rapport à la viscosité du produit étant, à l'angle de déphasage $\varphi_N$, plus faible que dans la condition de résonance ;
et **en ce que** l'électronique d'appareil de mesure est conçue
aussi bien pour déterminer, sur la base du premier signal de mesure de vibration ($s_1$) présent pendant l'intervalle de réglage de phase, au moins une valeur mesurée de fréquence, $X_f$, qui représente la fréquence utile pour le même intervalle de réglage de phase,
que pour générer, en utilisant la même valeur mesurée de fréquence, $X_f$, une valeur mesurée de densité, $X_\rho$, qui représente la densité, $\rho$, du produit.

**2.** Densimètre selon la revendication 1, pour lequel l'intervalle de réglage de phase n'est pas inférieur à 10 ms.

**3.** Densimètre selon l'une des revendications précédentes,
pour lequel l'électronique d'appareil de mesure est conçu pour modifier une fréquence du signal d'excitation ($e_1$) jusqu'à ce que l'angle de déphasage, $\varphi_N$, ait atteint une valeur de consigne de phase, $\varphi_{N\_SOLL}$, prédéfinie à cet effet, notamment de telle sorte que l'électronique d'appareil de mesure réduise ladite fréquence de signal dans le cas d'un angle de déphasage, $\varphi_N$, qui est réglé trop bas, c'est-à-dire inférieur à la valeur de consigne de phase, $\varphi_{N\_SOLL}$, et de telle sorte que l'électronique d'appareil de mesure augmente ladite fréquence de signal dans le cas d'un angle de déphasage, $\varphi_N$, qui est réglé trop haut, c'est-à-dire supérieur à la valeur de consigne de phase, $\varphi_{N\_SOLL}$.

**4.** Densimètre selon l'une des revendications précédentes,
pour lequel l'électronique d'appareil de terrain est conçue pour régler l'angle de déphasage, $\varphi_N$, pendant tout

l'intervalle de réglage de phase et/ou pendant une période de plus de 10 ms à une valeur de consigne de phase, $\varphi_{N\_SOLL}$, prédéfinie à cet effet ; notamment de telle sorte que l'angle de déphasage, $\varphi_N$, varie, à densité constante, de moins de $\pm 1\ \%$ de la même valeur de consigne de phase, $\varphi_{N\_SOLL}$, et/ou de moins de $\pm 2\ \%$ de la même valeur de consigne de phase, $\varphi_{N\_SOLL}$.

5. Densimètre selon l'une des revendications précédentes,
pour lequel le transducteur présente un deuxième capteur de vibrations (52), qui est espacé du premier capteur de vibrations le long de l'au moins un tube de mesure et qui est de construction identique au premier capteur de vibrations, lequel deuxième capteur est conçu pour détecter les vibrations de l'au moins un tube de mesure (10), et le deuxième capteur de vibrations (52) étant conçu pour détecter les mouvements vibratoires de l'au moins un tube de mesure (10) et pour les convertir en un deuxième signal de mesure de vibrations ($s_2$) représentant ces mouvements, notamment avec une fréquence de signal correspondant à la fréquence utile.

6. Densimètre selon la revendication 5,
pour lequel l'électronique d'appareil de mesure est conçue pour déterminer la valeur mesurée de fréquence, $X_f$, sur la base à la fois du premier signal de mesure de vibration (s1) et du deuxième signal de mesure de vibration ($s_2$) ; et/ou pour lequel l'électronique d'appareil de mesure est conçue pour ajuster la composante de force utile également au moyen du deuxième signal de mesure de vibration ($s_2$).

7. Densimètre selon l'une des revendications précédentes,
pour lequel l'électronique d'appareil de mesure est conçue pour régler la composante de force utile, notamment sa fréquence d'excitation, en dehors de l'intervalle de réglage de phase au moins temporairement, notamment lors d'une mise en marche du densimètre et/ou pour un contrôle de son aptitude au fonctionnement, de telle sorte que les vibrations utiles de l'au moins un tube de mesure soient temporairement des vibrations de résonance, c'est-à-dire que la fréquence utile corresponde temporairement à une fréquence de résonance de l'au moins un tube de mesure.

8. Densimètre selon l'une des revendications précédentes, pour lequel l'au moins un tube de mesure, comprenant notamment une paroi de tube en silicium ou en titane, présente un calibre inférieur à 1 mm, notamment inférieur à 0,5 mm.

9. Densimètre selon l'une des revendications précédentes, comprenant en outre :

un capteur de température couplé thermiquement à l'au moins un tube de mesure et conçu pour détecter une température du tube de mesure et la convertir en un signal de mesure de température ($\theta 1$) représentatif de celle-ci,
l'électronique d'appareil de mesure étant conçue pour déterminer au moins une valeur mesurée de température, $X_\theta$, au moyen du signal de mesure de température ($\theta 1$), laquelle valeur mesurée de température représente une température du tube de mesure, et
l'électronique d'appareil de mesure étant conçue pour générer la valeur mesurée de densité, $X_\rho$, en utilisant également la valeur mesurée de température, $X_\theta$.

10. Densimètre selon l'une des revendications précédentes, comprenant en outre :

un capteur d'allongement qui est couplé mécaniquement à l'au moins un tube de mesure,
lequel capteur est conçu pour détecter un allongement de l'au moins un tube de mesure et pour le convertir en un signal de mesure d'allongement ($\varepsilon 1$) représentant cet allongement,
l'électronique d'appareil de mesure étant conçue pour déterminer, au moyen du signal de mesure d'allongement ($\varepsilon 1$), au moins une valeur mesurée d'allongement, $X_\varepsilon$, qui représente un allongement du tube de mesure ou une contrainte mécanique créée à l'intérieur de l'au moins un tube de mesure, et
l'électronique d'appareil de mesure étant conçue pour générer la valeur mesurée de densité, $X_\rho$, en utilisant également la valeur mesurée d'allongement, $X_\varepsilon$.

11. Densimètre selon l'une des revendications précédentes, pour lequel l'électronique d'appareil de mesure est conçue pour générer, sur la base du premier signal de mesure de vibration ($s_1$) et du signal d'excitation ($e_1$), une valeur mesurée de viscosité, $X_\eta$, qui représente une viscosité, $\eta$, du produit.

12. Densimètre selon l'une des revendications 5 ou 6 ou une revendication dépendant de la revendication 5 ou 6, pour lequel l'au moins un tube de mesure (10) est conçu pour être traversé par le produit avec un débit massique, m, pendant l'exécution des vibrations utiles, afin d'induire dans le produit en écoulement des forces de Coriolis qui dépendent de son débit massique, m, lesquelles forces de Coriolis sont aptes à provoquer des vibrations de Coriolis superposées aux vibrations utiles et de même fréquence que celles-ci, de telle sorte qu'il existe une différence de phase, $\Delta_{\varphi m}$, qui dépend du débit massique, m, entre le premier signal de mesure de vibration ($s_1$) et le deuxième signal de mesure de vibration ($s_2$).

13. Densimètre selon la revendication 12,
pour lequel l'électronique d'appareil de mesure est conçue pour générer une valeur mesurée de débit massique, $X_m$, représentant le débit massique, m, sur la base à la fois du premier signal de mesure de vibration (si) et du deuxième signal de mesure de vibration ($s_2$), notamment de telle manière que l'électronique d'appareil de mesure génère une valeur mesurée de différence de phase, $X_{\Delta\varphi}$, sur la base du premier signal de mesure de vibration ($s_1$) et du deuxième signal de mesure de vibration ($s_2$), laquelle valeur mesurée représente la différence de phase, $\Delta_{\varphi m}$, qui dépend du débit massique, m, et de telle sorte que l'électronique d'appareil de mesure génère la valeur mesurée de débit massique, $X_m$, sur la base de la valeur mesurée de différence de phase, $X_{\Delta\varphi}$.

14. Densimètre selon la revendication 12 ou 13,
pour lequel l'électronique d'appareil de mesure est conçue pour déterminer une valeur mesurée de différence de phase, $X_{\Delta\varphi}$, pendant l'intervalle de réglage de phase sur la base à la fois du premier signal de mesure de vibration ($s_1$) et du deuxième signal de mesure de vibration ($s_2$), laquelle valeur mesurée représente la différence de phase, $X_{\Delta m}$, dépendant du débit massique, m, pour le même intervalle de réglage de phase.

*Fig. 1*

*Fig. 2*

Fig. 3

Fig. 4

EP 3 080 560 B1

Fig. 5

$2\pi \cdot 1{,}00001 \cdot f_R < 2\pi \cdot f_N < 2\pi \cdot 1{,}001 \cdot f_R$

$-90° < \Delta\varphi_N < 0°$

$F_N$

$V_N$

*Im*

*Re*

*Fig. 7*

$F_N, V_N$

$\underline{\Re}\,(\Delta\varphi_N = 0°)$

$2\pi \cdot f_N = 2\pi \cdot f_R$

*Im*

*Re*

*Fig. 6*

Fig. 8

EP 3 080 560 B1

Fig. 9

*Fig. 10*

Fig. 11

EP 3 080 560 B1

*Fig. 12*

**EP 3 080 560 B1**

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- US 20040123645 A
- US 20060096390 A
- US 20070119264 A
- US 20080047362 A
- US 20080190195 A
- US 20100005887 A
- US 20100011882 A
- US 20100257943 A
- US 20110161017 A
- US 20110219872 A
- US 20110265580 A
- US 20120123705 A
- US 4491009 A
- US 4524610 A
- US 4801897 A
- US 4996871 A
- US 5024104 A
- US 5287754 A
- US 5291792 A
- US 5349872 A
- US 5531126 A
- US 5705754 A
- US 5796010 A
- US 5796011 A
- US 5831178 A
- US 5945609 A
- US 5965824 A
- US 6006609 A
- US 6092429 A
- US 6223605 B
- US 6311136 B
- US 6477901 B
- US 6513393 B
- US 6647778 B
- US 6666098 B
- US 6651513 B
- US 6711958 B
- US 6840109 B
- US 6920798 B
- US 7017424 B
- US 7059176 B
- US 7077014 B
- US 7200503 B
- US 7216549 B
- US 7325462 B
- US 7360451 B
- US 7792646 B
- WO 0034748 A
- WO 0102816 A
- WO 2008059262 A
- WO 2013092104 A
- WO 8505677 A
- WO 8802853 A
- WO 8900679 A
- WO 9421999 A
- WO 9503528 A
- WO 9516897 A
- WO 9529385 A
- WO 9802725 A
- WO 9940394 A
- DE 102013101369
- DE 102013102708
- DE 102013102711
- DE 102008046891 A1
- US 5533381 A
- US 6311136 A
- US 6006609 B
- US 7549319 B